# EUROPÄISCHE PATENTSCHRIFT

(11) **EP 2 913 480 B1**
(45) Veröffentlichungstag und Bekanntmachung des Hinweises auf die Patenterteilung: **10.04.2019**
(21) Anmeldenummer: 15156110.7
(22) Anmeldetag: 23.02.2015
(51) Int. Cl.: F01D 5/06, F01D 9/04, F01D 5/14

(54) **TANDEMSCHAUFEL EINER STRÖMUNGSMASCHINE**
TANDEM BLADES OF A TURBO-MACHINE
AUBES EN TANDEM D'UNE TURBOMACHINE

(30) Priorität: 27.02.2014 DE 102014203603
(43) Veröffentlichungstag der Anmeldung: 02.09.2015
(73) Patentinhaber: Rolls-Royce Deutschland Ltd & Co KG, 15827 Blankenfelde-Mahlow (DE)
(72) Erfinder: Gümmer, Volker, Prof. Dr., 85411 Hohenkammer (DE)
(74) Vertreter: Maikowski & Ninnemann Patentanwälte Partnerschaft mbB

(56) Entgegenhaltungen:
- EP-A2- 0 823 540
- EP-A2- 2 261 463
- DE-A1-102009 013 399
- GB-A- 872 228
- US-A1- 2013 209 223
- US-A1- 2013 209 224
- US-A1- 2013 209 241

## Beschreibung

Die Erfindung betrifft eine Schaufelreihengruppe gemäß dem Oberbegriff des Anspruchs 1.

Die aerodynamische Belastbarkeit und die Effizienz von Strömungsmaschinen, insbesondere Bläsern, Verdichtern, Turbinen, Pumpen und Ventilatoren, wird durch das Wachstum und die Ablösung von Grenzschichten in der Nähe und auf den Naben- und Gehäusewänden begrenzt. Der Stand der Technik hält für den Fall hoher aerodynamischer Belastung und starken Grenzschichtwachstums auf den Ringkanalseitenwänden (Nabe oder Gehäuse) nur bedingt Lösungen bereit.

Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Eine derartige Strömungsmaschine ist beispielsweise aus der EP 2 261 463 A2 bekannt. Bei diesen Anordnungen, und insbesondere bei denen, die mehrere direkt benachbarte und relativ zueinander fest angeordnete Schaufelreihen aufweisen (also beispielsweise mehrere Rotorschaufelreihen auf der selben Trommel oder mehrere Statorschaufelreihen), ergeben sich bei höherer aerodynamischer Belastung starke Grenzschichtablösung in der Randzone des Hauptströmungspfades, d. h. an der Naben- oder Gehäusekontur.

Die Probleme in den Randbereichen sind primär darauf zurückzuführen, dass die in der Mitte des Hauptströmungspfades günstige Anordnung zweier benachbarter Schaufelkanten einer Schaufelreihengruppe zueinander sich in der Nähe der Strömungspfadberandung ungünstig auswirkt. Auch sind von Einzelschaufelreihen bekannte Entwurfsregeln ungültig. Für Schaufelreihengruppen sind neue Regeln zu erschließen. Insbesondere kann die erforderliche Strömungsumlenkung entweder in Teilen der Schaufelhöhe oder entlang der gesamten Schaufelhöhe schnell so hoch sein, dass die konventionelle Anordnung einer Schaufelreihengruppe zu einer abgelösten Grenzschichtströmung in den Randbereichen des Hauptströmungspfades an Naben- und/oder Gehäusewänden führt.

Aus der US 2013/0209223 A1 ist es bekannt, die meridionale Überlappung zwischen vorderen und hinteren Schaufeln einer Schaufelreihengruppe zwischen der Mitte des Hauptströmungspfades und der Hauptströmungspfadberandung zu variieren. Aus der US 2013/0209224 A1 ist es bekannt, den Grad der Überlappung zwischen vorderen und hinteren Schaufeln einer Schaufelreihengruppe sowie den Abstand benachbarter Kanten der vorderen und hinteren Schaufel zwischen der Mitte des Hauptströmungspfades und der Hauptströmungspfadberandung zu variieren.

Eine Variation der Überlappung und des Abstandes ergibt sich üblicherweise bei jeder Realisierung einer Schaufelreihengruppe, ohne dass dabei zwangsläufig eine vorteilhafte Beeinflussung der Strömung erreicht würde. Die US 2013/0209241 A1 und US 2013/0209224 A1 beschreiben unterschiedlichste Möglichkeiten der Variation, ohne dass dabei aerodynamisch bedeutsame Parameter herangezogen oder dem Ingenieur Bewertungen der möglichen Variationen an die Hand gegeben werden. Eine technische Lehre im Hinblick auf die Festlegung der genauen Gestalt aller Schaufelkanten zweier benachbarter Mitgliedschaufelreihen wird nicht gegeben, obwohl gerade diese von entscheidender Bedeutung für eine günstige Beeinflussung des Gesamtströmungsverhaltens sind. Die US 2013/0209241 A1 behandelt den Kantenabstand benachbarter Mitgliedschaufelreihen in der Umfangsebene (Axialansicht). Die Strömungsrichtung in Schaufelreihen verläuft aber mit einer teils erheblichen Strömungsdrallkomponente, sodass die Beschaufelung erheblich gegen die Axialrichtung angestellt sein kann. Entscheidend für das aerodynamische Verhalten ist aber eine Festschreibung der Schaufelkanten in einer Ansicht senkrecht und parallel zur Schaufelprofilsehne. Eine in der Axialebene sichtbare Schaufelkante kann also durch unendlich viele unterschiedliche in den aerodynamisch relevanten Sehnen- und Sehnenorthogonalrichtungen festgelegte Schaufelkantenformen zustande kommen. Sie kann somit die Gestalt der Schaufelkanten nicht eindeutig beschreiben und demzufolge auch nicht die aeordynamische Problemstellung einer vorteilhaften Strömungsbeeinflussung lösen.

Der vorliegenden Erfindung liegt die Aufgabe zu Grunde, eine Schaufelreihengruppe bereitzustellen, die durch die Festlegung von Kantenformen und Beziehungen zwischen den Kanten zweier benachbarter Mitgliedschaufelreihen sowohl im mittleren Bereich als auch in den Randbereichen des Hauptströmungspfades ein günstiges Strömungsverhalten realisiert.

Diese Aufgabe wird erfindungsgemäß durch eine Schaufelreihengruppe mit den Merkmalen des Anspruchs 1 gelöst.

Danach stellt die erfindungsgemäße Lösung eine Schaufelreihengruppe bestehend aus mindestens zwei benachbarten und relativ zueinander fest angeordneten Schaufelreihen (mehrere miteinander rotierende Rotorschaufelreihen oder mehrere Statorschaufelreihen) bereit, die in einem Hauptströmungspfad einer Strömungsmaschine anordbar sind. Dabei ist die Vorderkante mindestens einer Schaufel der hinteren Mitgliedsschaufelreihe in der Umgebung einer Schaufel der vorderen Mitgliedsschaufelreihe vorgesehen, wobei gegebenenfalls zwischen der Druckseite der Schaufel und der Saugseite der Schaufel eine Nebenpassage ausgebildet sein kann.

Aufgrund der hohen Relevanz der Schaufelkantenformen der beteiligten Schaufeln und der Formen der einzelnen Kanten relativ zueinander für eine günstige Strömungsführung und eine schaufelhöhenabhängige Ausnutzung der Potentialeffekte im aerodynamisch wichtigen Interferenzbereich der beiden Mitgliedschaufelreihen ist erfindungsgemäß vorgesehen, dass im Bereich zwischen der mittleren Meridionalstromlinie und einer der Hauptströmungspfadberandungen in einer Ansicht senkrecht zu einer dritten Koordinatenrichtung und innerhalb eines Winkelbereiches von +/-45° um eine erste Koordinatenrichtung die vordere Schaufelkante einer vorderen Schaufel und beide Schaufelkanten einer hinteren Schaufel wenigstens in einem Teilbereich zwischen der mittleren Meridionalstromlinie und der Hauptströmungspfadberandung druckseitig von der hinteren Schaufelkante der vorderen Schaufel angeordnet sind.

Dabei sind die erste und die dritte Koordinatenrichtung wie folgt definiert: es ist ein Hilfskoordinatensystem mit der ersten, einer zweiten und der dritten Koordinatenrichtung gegeben, wobei die erste Koordinatenrichtung unter dem Winkel lambdam gegen die Meridionalrichtung stromabwärts weist, die zweite Koordinatenrichtung senkrecht zur ersten Koordinatenrichtung von der Druckseite der vorderen Schaufel weg weist, und die dritte Koordinatenrichtung senkrecht auf der ersten Koordinatenrichtung und der zweiten Koordinatenrichtung steht.

Die erfindungsgemäße Lösung ermöglicht eine günstige Strömungsführung und schaufelhöhenabhängige Ausnutzung der Potentialeffekte im aerodynamisch wichtigen Interferenzbereich benachbarter Mitgliedschaufelreihen, indem sie Gemeinsamkeiten mehrerer Schaufelkanten bezüglich ihrer Lage, nämlich ihre druckseitige Anordnung, bezogen auf die Lage der hinteren Schaufelkante der vorderen Schaufel vorsieht. Weitere Gemeinsamkeiten mehrerer Schaufelkanten können hinsichtlich der Form der Schaufelkanten vorliegen.

Gemäß der Erfindung gelten die oben definierten Beziehungen in einer Ansicht der Schaufelkanten senkrecht zur dritten Koordinatenrichtung und exakt entlang der ersten Koordinatenrichtung, d.h. es werden die Schaufelreihengruppe, ihre Schaufelkanten und ihre Schaufelkantenparameter in einer Ansicht senkrecht zu den zweiten und dritten Koordinatenrichtungen betrachtet.

Eine Ausgestaltung der Erfindung sieht vor, dass die Schaufelhinterkante HK(i+1) der hinteren Schaufel wenigstens in einem Teilbereich zwischen der mittleren Meridionalstromlinie SLM und der Hauptströmungspfadberandung druckseitig von den Schaufelvorderkanten VK(i) und VK(i+1) der vorderen und hinteren Schaufel angeordnet ist.

Gemäß einer Ausgestaltung der Erfindung ist vorgesehen, dass wenigstens zwei Schaufelkanten der Schaufeln der Schaufelreihengruppe bezüglich ihres Kantentyps eine qualitative Gleichheit aufweisen. Dabei ist eine qualitative Gleichheit zweier Schaufelkanten dann gegeben, wenn die Schaufelkanten vom selben Kantentyp sind oder spiegelbildlich vom selben Kantentyp sind (d.h. nach Spiegelung einer von zwei betrachteten Kanten die beiden betrachteten Kanten vom selben Kantentyp sind). Dabei sind die Schaufelkanten jeweils einem einer Mehrzahl von Kantentypen zuordbar, die durch die Krümmung des Kantenverlaufs und/oder die Anzahl von Krümmungswechseln der Schaufelkante und/oder den Wölbungsgrad der Schaufelkante definiert sind. Insbesondere werden folgende Kantentypen definiert:
Kantentyp A: es liegt ein im wesentlichen linearer Verlauf vor, mit sehr kleinem Wölbungsgrad von WG < 0,003.
Kantentyp B: es liegt ein schwach gekrümmter Verlauf vor, mit kleinem Wölbungsgrad von 0,003 < WG < 0,01.
Kantentyp C: es liegt ein wenigstens teilweise gekrümmter Verlauf ohne Krümmungswechsel und mit einem Wölbungsgrad von WG > 0,01 und mit einem Abschnitt mit stromaufwärts konkaver Krümmung vor.
Kantentyp D: es liegt ein wenigstens teilweise gekrümmter Verlauf ohne Krümmungswechsel und mit einem Wölbungsgrad von WG > 0,01 und mit einem Abschnitt mit stromaufwärts konvexer Krümmung vor.
Kantentyp E: es liegt ein wenigstens teilweise gekrümmter Verlauf mit einem Krümmungswechsel und mit einem Wölbungsgrad von WG > 0,01 und mit einem Abschnitt zwischen dem Krümmungswechselpunkt und der Hauptströmungspfadberandung HB mit stromaufwärts konkaver Krümmung vor.
Kantentyp F: es liegt ein wenigstens teilweise gekrümmter Verlauf mit einem Krümmungswechsel und mit einem Wölbungsgrad von WG > 0,01 und mit einem Abschnitt zwischen dem Krümmungswechselpunkt und der Hauptströmungspfadberandung HB mit stromaufwärts konvexer Krümmung vor.
Kantentyp G: es liegt ein wenigstens teilweise gekrümmter Verlauf mit zwei Krümmungswechseln und mit einem Wölbungsgrad von WG > 0,01 und mit einem Abschnitt zwischen den beiden Krümmungswechselpunkten mit stromaufwärts konkaver Krümmung vor.
Kantentyp H: es liegt ein wenigstens teilweise gekrümmter Verlauf mit zwei Krümmungswechseln und mit einem Wölbungsgrad von WG > 0,01 und einem Abschnitt zwischen den beiden Krümmungswechselpunkten mit stromaufwärts konvexer Krümmung vor.

Gemäß einer Ausgestaltung der Erfindung ist vorgesehen, dass bei der erfindungsgemäßen Schaufelreihengruppe die Hinterkante der vorderen Schaufel vom Kantentyp D ist. In einer weiteren Ausgestaltung ist vorgesehen, dass die Hinterkante der vorderen Schaufel vom Kantentyp E ist.

Es kann vorgesehen sein, dass eine qualitative Gleichheit der mindestens zwei Schaufelkanten VK(i), HK(i), VK(i+1) und HK(i+1) an der selben Schaufelreihe der Schaufelreihengruppe vorgesehen ist. Dabei kann vorgesehen sein, dass eine qualitative Gleichheit für die Schaufelkanten VK(i) und HK(i) der vorderen Schaufel vorgesehen ist, und/oder dass eine qualitative Gleichheit für die Schaufelkanten VK(i+1) und HK(i+1) der hinteren Schaufel vorgesehen ist.

Weiter kann vorgesehen sein, dass eine qualitative Gleichheit an mindestens drei Schaufelkanten VK(i), HK(i), VK(i+1) und HK(i+1) einer vorderen Schaufel und einer hinteren Schaufel der Schaufelreihengruppe vorgesehen ist. Auch kann vorgesehen sein, dass eine die qualitative Gleichheit an allen vier Schaufelkanten VK(i), HK(i), VK(i+1) und HK(i+1) einer vorderen Schaufel und einer hinteren Schaufel der Schaufelreihengruppe vorgesehen ist.

Weitere Ausgestaltungen der Erfindung sind in den Unteransprüchen angegeben.

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Reihe oder aus mehreren benachbarten und eine Gruppe bildenden Reihen von Schaufeln, die mit der rotierenden Welle der Maschine verbunden sind und Energie mit dem Arbeitsmedium austauschen. Erfindungsgemäß günstig ist eine Anwendung auf Strömungsarbeitsmaschinen, bei denen der Rotor Energie an das Arbeitsmedium abgibt. Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit einem festen oder einem freien Schaufelende mit Spalt ausgeführt sein können.

Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so daß die Rotorschaufelreihen von Stufe zu Stufe die Drehrichtung wechseln. Hierbei existieren keine Statoren zwischen aufeinander folgenden Rotoren. Schließlich kann die Strömungsmaschine alternativ eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Erfindung wird nachfolgend unter Bezugnahme auf die Figuren der Zeichnung anhand mehrerer Ausführungsbeispiele näher erläutert. Es zeigen:
- Fig. 1:: mehrere Schaufelreihengruppen nach dem Stand der Technik;
- Fig. 2:: die Definition von Meridionalstromlinien;
- Fig. 3:: eine erfindungsgemäße Schaufelreihengruppe mit Umfangsbetrachtung;
- Fig. 4:: erfindungsgemäße Definitionen in einem Meridionalstromlinienschnitt;
- Fig. 5:: erfindungsgemäße Definitionen in der Ansicht A-A aus Fig. 4;

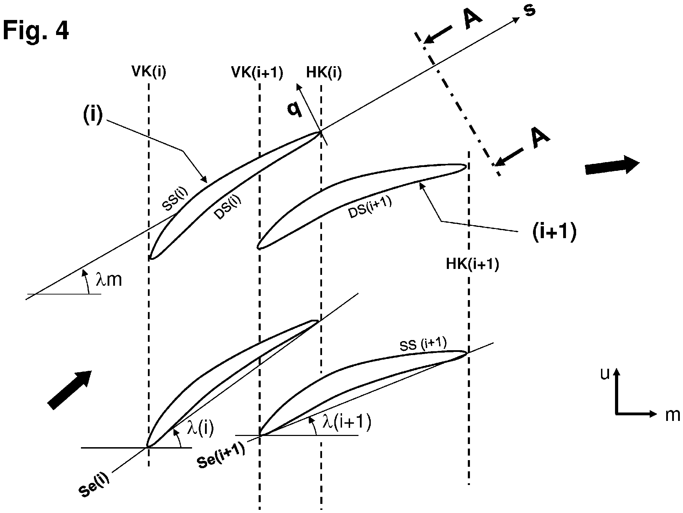

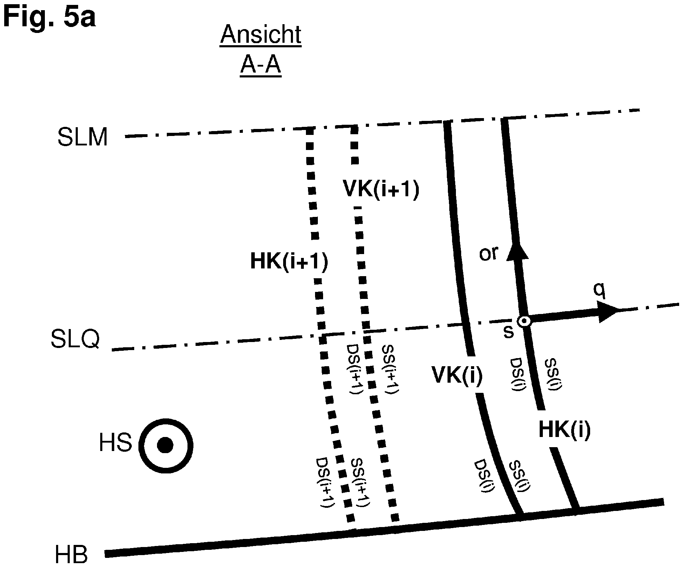

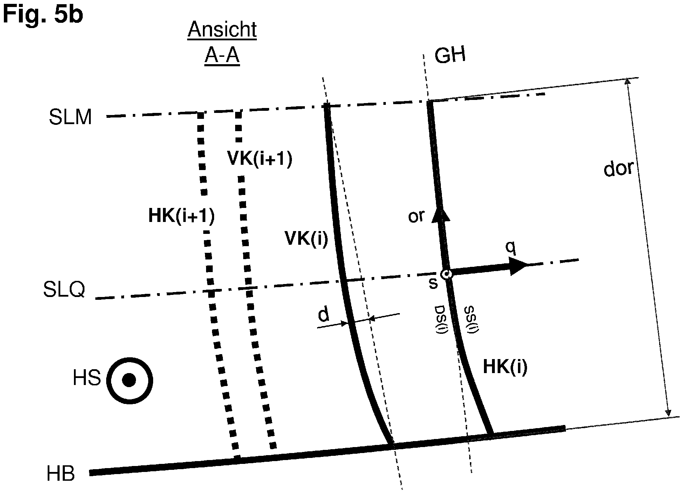

- Fig. 5:: weitere erfindungsgemäße Definitionen in der Ansicht A-A aus Fig. 4;

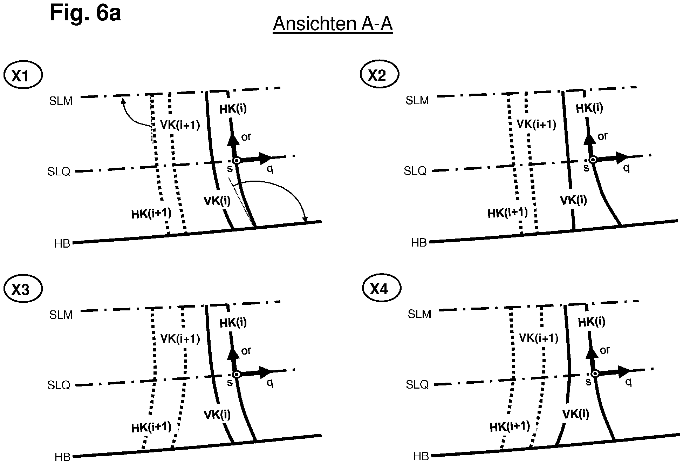

- Fig. 6a:: erfindungsgemäße Schaufelgruppenanordnungen in der Ansicht A-A;

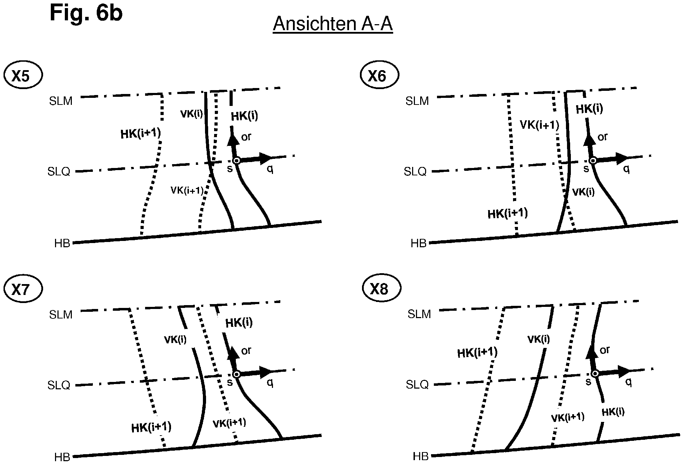

- Fig. 6b:: weitere erfindungsgemäße Schaufelgruppenanordnungen in der Ansicht A-A; und

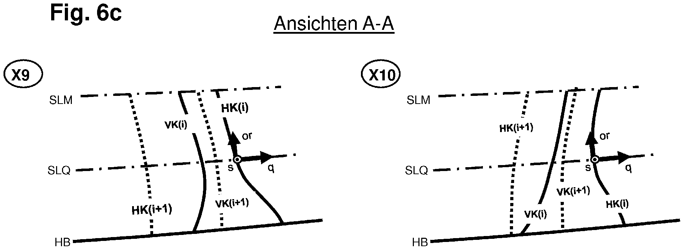

- Fig. 6c:: weitere erfindungsgemäße Schaufelgruppenanordnungen in der Ansicht A-A.

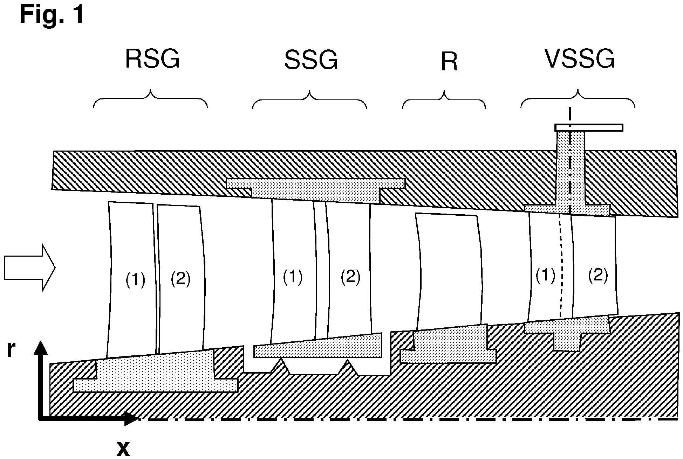

Eine konventionelle Schaufelreihengruppe nach dem Stand der Technik, wie sie in Fig. 1 gezeigt ist, besitzt keine besonderen, eine spezifischen die Schaufelkantenform betreffenden Merkmale. Insbesondere eine aus Profiltiefenvariationen oder besonderen Relationen zwischen einzelnen Schaufelkanten hervorgehende Sonderform der vier Schaufelkanten ist nicht gegeben. Es sind keine weiteren Gestaltungsmerkmale vorhanden, die aber aus einer komplexeren Ausnutzung der Anordnung als Schaufelgruppe innovativ entwickelt werden können. Eine Schaufelreihengruppe, wie hier betrachtet, besitzt, anders als eine Einzelschaufelreihe, eine im Verhältnis viel höhere Belastung der Seitenwandgrenzschichten, die durch besondere Zusatzmaßnahmen aufzufangen ist. Eine besondere Schaufelkantenform und Abstimmung der Katen relativ zueinander im Bereich der Schaufelenden unter der aerodynamischen Sonderwirkung einer Anordnung als Schaufelreihengruppe ist deshalb ein Weg zu Erweiterung des Betriebsbereiches von Schaufelreihengruppen.

Die Fig. 1 zeigt in der durch die Axialrichtung x und die Radialrichtung r gebildeten Meridionalebene mehrere Schaufelreihengruppen, wobei jede der Schaufelreihengruppen aus jeweils zwei gleichartigen und ihre relative Anordnung zueinander (sowohl in Umfangsrichtung als auch in Meridionalrichtung) nicht ändernden Mitgliedsschaufelreihen besteht. Es handelt sich also um doppelreihige Leiträder oder Laufräder.

So besteht eine Rotorschaufelreihengruppe RSG aus zwei mit gleicher Drehgeschwindigkeit laufenden und miteinander verbundenen Rotorschaufelreihen; das erste Mitglied der Gruppe ist mit (1) und das zweite Mitglied der Gruppe mit (2) gekennzeichnet. Eine Statorschaufelreihengruppe SSG besteht aus zwei direkt benachbarten feststehenden Statorschaufelreihen (1) und (2).

Eine variable Statorschaufelreihengruppe VSSG besteht aus zwei direkt benachbarten Statorschaufelreihen (1) und (2), wobei jeweils eine Schaufel der vorderen Reihe mit einer Schaufel der hinteren Reihe auf einem gemeinsamen Drehteller vorgesehen sind und auf diese Weise gemeinsam um die Drehachse verstellbar sind.

Allen Schaufelreihengruppen nach dem Stand der Technik ist gemeinsam, dass keine gezielt Formgebung der Schaufelkanten und keine vorteilhafte Inbeziehungsetzung der einzelnen Schaufelkantenformen vorgesehen ist. Zudem werden diese üblicherweise in der Meridionalebene (x-r) oder Axialebene (r-u) betrachtet, die keinen Rückschluss auf Eigenschaften in dem aerodynamisch entscheidenden Bezugssystem parallel bzw. senkrecht zur Profilsehne eines Schaufelschnitts zulässt. So können beispielweise zwei sich in der Axialebene (x-r) schneidende Schaufelkanten in sehnenparalleler Ansicht keinen Berühr- oder Schnittpunkt haben. Zudem fehlt im Stand der Technik eine technische Lehre zur Festlegung wichtiger Größen in den für die strömungstechnische Problemstellung relevanten Betrachtungsebenen (parallel bzw. senkrecht zur Profilsehne).

Die Lösungen nach dem Stand der Technik sind entweder aufgrund des Fehlens relevanter Kriterien nicht verwertbar oder sind für die Strömung in der Nähe der Hauptströmungspfadberandung (Nabe oder Gehäuse) nachteilig.

Die genaue erfindungsgemäße Festlegung hat demzufolge in einem profilsehnenrichtungsbezogenen System zu erfolgen. Diese Methode weiter unten im Detail beschrieben. Jede der erfindungsgemäßen Schaufelreihengruppen besteht auch hier aus jeweils zwei gleichartigen und die Relativposition zueinander nicht ändernden Mitgliedsschaufelreihen.

So besteht eine erfindungsgemäße Rotorschaufelreihengruppe RSG aus mindestens zwei mit gleicher Drehgeschwindigkeit laufenden und miteinander verbundenen Rotorschaufelreihen. Eine erfindungsgemäße Statorschaufelreihengruppe SSG besteht aus mindestens zwei direkt benachbarten feststehenden Statorschaufelreihen.

Eine erfindungsgemäße variable Statorschaufelreihengruppe VSSG besteht aus mindestens zwei direkt benachbarten Statorschaufelreihen. Eine Schaufel einer der Mitgliedsschaufelreihen kann mit mindestens einer Schaufel der ihr unmittelbar stromab liegenden Mitgliedsschaufelreihe auf einem gemeinsamen Drehteller vorgesehen. Alternativ können aber auch mindestens zwei, unterschiedlichen Mitgliedschaufelreihen zugehörige, Schaufeln je auf einem individuellen Drehteller angeordnet sein.

Jede der erfindungsgemäßen Schaufelreihengruppen RSG, SSG und VSSG können auch mehr als zwei Mitgliedsschaufelreihen besitzen.

Die beschriebene Konfiguration der Schaufelreihengruppe schließt die Möglichkeit ein, dass an mindestens einer Mitgliedsschaufelreihe der Abstand zwischen zwei benachbarten Schaufeln entlang des Umfangs variiert. Es kann auch günstig sein, wenn die axiale Position zweier benachbarter Schaufeln dieser Schaufelreihe entlang des Umfangs variiert. Es kann auch günstig sein, wenn die Profiltiefe zweier benachbarter Schaufeln dieser Schaufelreihe entlang des Umfangs variiert.

Es kann vorteilhaft sein, wenn die Anzahl der Schaufeln zweier benachbarter Mitgliedsschaufelreihen in einem besonderen Verhältnis stehen, das heißt, dass die Anzahl der Schaufeln der Mitgliedsschaufelreihe (i) ein Vielfaches der Anzahl der Schaufeln der Mitgliedsschaufelreihe (i+1) bildet, oder die Anzahl der Schaufeln der Mitgliedsschaufelreihe (i+1) ein Vielfaches der Anzahl der Schaufeln der Mitgliedsschaufelreihe (i) bildet, oder die Anzahl der Schaufeln der Mitgliedsschaufelreihe (i) und die Anzahl der Schaufeln der Mitgliedsschaufelreihe (i+1) gleich sind. Besonders vorteilhaft kann es sein, wenn das Verhältnis der Schaufelzahlen der Reihen (i) und (i+1) im Verhaltnis von 1:2 steht.

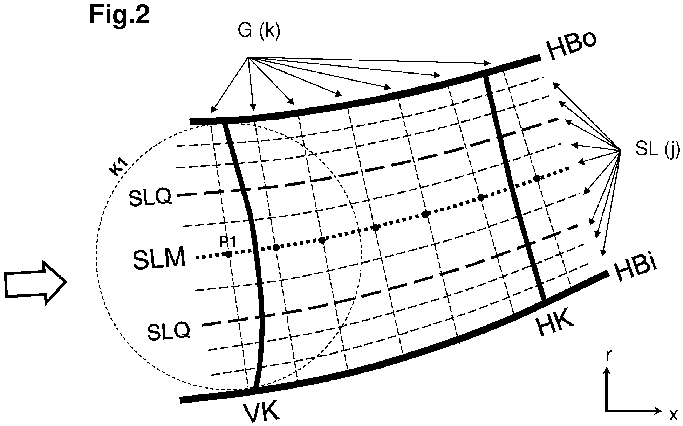

Zum Zweck der Vorbereitung von erfindungsgemäß wichtigen Definitionen zeigt die Fig. 2 zur Definition von Meridionalstromlinien einen Hauptströmungspfad einer Strömungsmaschine mit Durchströmung von links nach rechts (angezeigt durch den dicken Pfeil), in der durch die Axialkoordinate x und die Radialkoordinate r gebildeten Meridionalebene, wobei der Hauptströmungspfad durch die radial inneren Hauptströmungspfadberandung HBi und die radial äußere Hauptströmungspfadberandung HBo begrenzt wird. Mittig zwischen der radial inneren Hauptströmungspfadberandung HBi und der radial äußeren Hauptströmungspfadberandung HBo ist die mittlere Meridionalstromlinie SLM gegeben. Ihr Verlauf entspricht der Verbindung der Mittelpunkte dem Hauptströmungspfad einbeschriebener Kreise, wie im Bild für den ersten markierten Punkt P1 auf der mittleren Meridionalstromlinie SLM und den zugehörigen Kreis K1 beispielhaft verdeutlicht wird. VK und HK bezeichnen die Vorderkante und die Hinterkante einer im Hauptströmungspfad angeordneten Schaufel.

Eine Schar von Geraden G(k) ist innerhalb des Hauptströmungspfades gegeben, deren Mitglieder jeweils senkrecht auf der mittleren Meridionalstromlinie SLM stehen und an den Hauptströmungspfadberandungen HB enden. Weitere Meridionalstromlinien SL(j) sind durch die Verbindung von Punkten bei jeweils gleicher prozentualer Unterteilung der Geraden G(k) zwischen den Hauptströmungspfadberandungen HB definiert.

Die Rotation einer Meridionalstromlinie um die Maschinenachse ergibt eine Meridionalstromfläche SF(j). Der Schnitt einer Meridionalstromfläche mit einer Schaufel der Strömungsmaschine ergibt einen Meridionalstromlinienschnitt SLS(j). Mittig zwischen einer der Hauptströmungspfadberandungen HBi und HBo und der mittleren Meridionalstromlinie SLM ergibt sich auf diese Weise jeweils die Viertelmeridionalstromlinie SLQ.

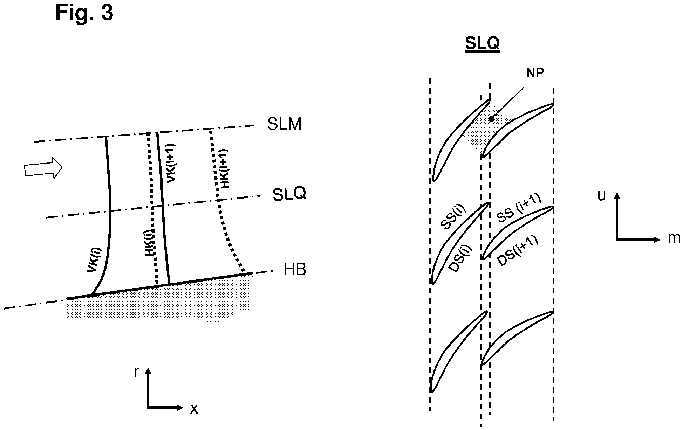

Es kann sich, je nach Schaufelform ergeben, dass die Profiltiefen und Schaufelkantenformen in der Meridionalebene (x,r) nicht oder nicht quantitativ erfassbar sind. Deshalb ist für erfindungsmäße Festlegungen die Betrachtung in einem profilsehnenrichtungsbezogenen Koordinatensystem vorzunehmen. Dazu zeigt die Fig. 3 zunächst auf ihrer linken Seite beispielhaft eine Anordnung von zwei zu einer erfindungsgemäßen Schaufelreihengruppe gehörenden und benachbarten Mitgliedsschaufelreihen (i) und (i+1) in der durch die Axialrichtung x und die Radialrichtung r gebildeten Meridionalebene. Dargestellt ist die erfindungsgemäße Anordnung im Bereich zwischen der Hauptströmungspfadmitte (mittlere Meridionalstromlinie SLM, entlang der dortigen Meridionalrichtung m), und einer Hauptströmungspfadberandung HB. Die Hauptströmungspfadberandung HB stellt eine Kontur an der Nabe oder am Gehäuse der Strömungsmaschine dar, zum Beispiel an einem Drehteller, einer Wandung, einem Statorfuß, einem Statordeckband, einem Rotorfuß oder einem Rotordeckband.

Die Hauptströmungspfadberandung HB ist entweder fest mit dem Ende mindestens einer Mitgliedsschaufelreihe verbunden, oder es ist ein Spalt zwischen der Hauptströmungspfadberandung und mindestens dem Ende einer Mitgliedsschaufelreihe vorgesehen.

Die Anordnung zeigt die zwei Mitgliedsschaufelreihen (i) und (i+1), mit jeweils zwei Schaufelkanten, Vorderkante VK(i) und Hinterkante HK(i) beziehungweise Vorderkante VK(i+1) und Hinterkante HK(i+1).

Die rechte Seite der Fig. 3 zeigt die Anordnung der betrachteten zwei Mitgliedsschaufelreihen in einer von der Meridionalkoordinate m und der Umfangsrichtung u gebildeten Meridionalstromfläche. Eine entsprechende Umfangsabwicklung ist beispielhaft für andere Meridionalstromlinienschnitte am mittleren Meridionalstromlinienschaufelschnitt SLM in Hauptströmungspfadmitte dargestellt. Der Einfachheit halber (aber erfindungsgemäß nicht zwingend nötig) besitzen hier die beiden Mitgliedschaufelreihen gleiche Schaufelanzahlen. Vorteilhaft ist ebenfalls ein Schaufelanzahlverhältnis der Reihen (i) und (i+1) von 1:2, wobei jede zweite Schaufel der Reihe (i+1) vorteilhaft nahe der Druckseite einer Schaufel der Reihe (i) angeordnet sein kann. Die Saugseiten der Schaufeln (i) und (i+1) sind jeweils mit SS(i) und SS(i+1) und die Druckseiten mit DS(i) und DS(i+1) gekennzeichnet.

Die Schaufeln können günstigerweise so vorgesehen sein, dass zwischen der Druckseite einer Schaufel (i) und der Saugseite einer Schaufel (i+1) eine Nebenpassage (dargestellt als schattierte Fläche und gekennzeichnet mit NP) ausgebildet ist.

Es kann vorgesehen sein, dass in wenigstens einem Bereich der Hauptströmungspfadhöhe von der Vorderkante VK(i+1) der hinteren Mitgliedsschaufelreihe zur Hinterkante HK(i) der vorderen Mitgliedsschaufelreihe ein meridionaler Eingriff vorgesehen ist, dessen Betrag in Richtung mindestens einer der Hauptströmungspfadberandungen HB in wenigstens einem Teilabschnitt zunimmt. Ein solcher meridionaler Eingriff kann bei sämtlichen Ausführungsbeispielen der Erfindung vorgesehen sein.

Die Fig. 4 zeigt, wie die rechte Seite der Fig. 3, einen Meridionalstromlinienschaufelschnitt. Es sind die Definition verschiedener relevanter Größen und Ansichten in der durch die Meridionalrichtung m und die Umfangskoordinate u gegebenen Ebene gegeben. Zur Vereinfachung sind nur jeweils 2 Schaufeln und die jeweils dazwischen liegende Schaufelhauptpassage der Mitgliedsschaufelreihen (i) und (i+1) dargestellt. Die Hauptströmungsrichtung ist durch dicke schwarze Pfeile gekennzeichnet. Die Verbindungslinien der Schaufelkanten sind entsprechend mit VK(i), HK(i), VK(i+1) und HK(i+1) gekennzeichnet. Jedes Schaufelprofil ist mit seiner Saugseite SS, seiner Druckseite DS dargestellt. Es wird darauf hingewiesen, dass zu Zwecken einer übersichtlichen Darstellung in der Fig. 4 und auch in den anderen Figuren zwischen der Bezeichnung der Mitgliedsschaufelreihen (i) und (i+1) und der Bezeichnung der einzelnen Schaufeln der Mitgliedsschaufelreihen nicht unterschieden wird, d.h. die Schaufeln sind ebenfalls mit (i) und (i+1) bezeichnet.

Die Sehne der vorderen Schaufel Se(i) ist definiert als die druckseitig an das Profil der Schaufel (i) angelegte Tangente. Die Sehne der hinteren Schaufel Se(i+1) ist definiert als die druckseitig an das Profil der Schaufel (i+1) angelegte Tangente.

Der Staffelungswinkel der vorderen Schaufel lambda(i) (λi) ist definiert als der Neigungswinkel der Sehne der vorderen Schaufel S(i) gegen die Meridionalrichtung m. Der Staffelungswinkel der hinteren Schaufel lambda(i+1) (λi+1) ist definiert als der Neigungswinkel der Sehne der hinteren Schaufel S(i+1) gegen die Meridionalrichtung m. Der mittlere Staffelungswinkel lambdam (λm) ist definiert als Mittelwert der Staffelungswinkel lambda(i) und lambda(i+1) gemäß: lambdam= (lambda(i)+lambda(i+1)) / 2.

Die Koordinatenrichtung s ist mit lambdam gegen die Meridionalrichtung m geneigt und zeigt stromabwärts. Die Koordinatenrichtung q steht senkrecht auf s und ist weggehend von der Druckseite der Schaufel (i) orientiert. Die Koordinatenrichtung or steht senkrecht auf s und q.

Für die Definition der Ansicht A-A wird davon ausgegangen, dass der in Fig.4 dargestellte Meridionalstromlinienschaufelschnitt sich an der Viertelmeridionalstromlinie SLQ befindet. Die durch die dortige Koordinatenrichtung s gekennzeichnete mittlere Sehnenrichtung ist repräsentativ für die örtliche Hauptströmungsrichtung im strömungsmechanischen Interferenzbereich der Schaufeln (i) und (i+1). Daher ist ein fester Bezug zu dieser aerodynamisch ausgewiesenen und bedeutsamen mittleren Sehnenrichtung essentiell für eine strömungsmechanisch treffende Festlegung von Ausprägungsmerkmalen einer Schaufelreihengruppe. Die Schaufelkanten und deren beschreibende Parameter werden aus diesem Grunde im Koordinatensystem (q-or) definiert. In der Ansicht A-A können alle Schaufelkanten einer Schaufelreihenpaarung (i), (i+1) hinsichtlich ihrer strömungsmechanischen Wirkung sinnvoll beurteilt und beschrieben werden.

Die Ansicht A-A erfolgt senkrecht zu der durch die Koordinatenrichtung s gekennzeichneten mittleren Sehnenrichtung der Schaufelanordnung im Meridionalstromlinienschaufelschnitt bei der Viertelmeridionalstromlinie SLQ, (in der q-or-Ebene).

Die Fig. 5a zeigt als dicke durchgezogene Linien die Kanten VK(i) und HK(i) der vorderen Schaufel und als dicke gepunktete Linien die Kanten VK(i+1) und HK(i+1) der hinteren Schaufel im Bereich zwischen der Hauptströmungspfadberandung HB und der bei halber Schaufelhöhe definierten mittleren Meridionalstromlinie SLM, in der q-or-Ebene (Ansicht A-A). An den beiden Schaufelkanten der vorderen Schaufel sind die Druckseite DS(i) und Saugseite SS(i) gekennzeichnet. An den beiden Schaufelkanten der hinteren Schaufel sind die Druckseite DS(i+1) und Saugseite SS(i+1) gekennzeichnet. Die Hauptströmung kommt dem Betrachter entgegen; ihre Richtung ist deshalb mit einem dicken umkreisten Punkt markiert. Zudem ist die Viertelmeridionalstromlinie SLQ eingezeichnet, wobei der Koordinatenursprung im Schnittpunkt von SLQ mit der Hinterkante der vorderen Schaufel HK(i) angeordnet ist, die Koordinatenrichtung or orthogonal zu der durch SLQ verlaufenden Meridionalstromfläche gegeben ist. Die Koordinatenrichtung q verläuft parallel zur Viertelmeridionalstromlinie SLQ. Die Koordinatenrichtung or verläuft orthogonal zu SLQ und ist nicht zwingend parallel zu HK(i). Die Hauptströmungsrichtung kommt dem Betrachter entgegen, und wird hier deshalb durch einen umkreisten Punkt angezeigt.

Die Fig. 5b zeigt am Beispiel der Vorderkante VK(i) die zur Definition des Wölbungsgrades einer Schaufelkante nötigen Größen. Die Distanz dor zwischen SLM und HB wird orthogonal zur Viertelmeridionalstromlinie SLQ im Schnittpunkt mit der Hinterkantenlinie HK(i) (in Richtung von or und senkrecht zu q) gemessen, wobei die Hilfsgerade GH die SLQ-Orthogonalenrichtung ausweist. Die maximale Wölbung einer Schaufelkante d ergibt sich als größter feststellbarer Abstand zwischen der betreffenden Schaufelkante selbst und der geradlinigen Verbindung der Schaufelkantenpunkte an der SLM und der HB.

Der Wölbungsgrad WG einer Schaufelkante ist definiert gemäß WG1 = d / dor.

Die Schaufelkanten werden hinsichtlich ihrer qualitativen Form in unterschiedliche Kantentypen unterteilt:
Kantentyp A: ein im wesentlichen linearer Verlauf, dadurch gekennzeichnet, dass ein sehr kleiner Wölbungsgrad von WG < 0,003 vorgesehen ist. Kantentyp B: ein schwach gekrümmter Verlauf, dadurch gekennzeichnet, dass ein kleiner Wölbungsgrad von 0,003 < WG < 0,01 vorgesehen ist. Kantentyp C: ein wenigstens teilweise gekrümmter Verlauf ohne Krümmungswechsel und mit einem Wölbungsgrad von WG > 0,01, wobei ein Abschnitt mit einer zur Schaufeldruckseite hin konkaven Krümmung vorgesehen ist. Kantentyp D: ein wenigstens teilweise gekrümmter Verlauf ohne Krümmungswechsel und mit einem Wölbungsgrad von WG > 0,01, wobei ein Abschnitt mit einer zur Schaufeldruckseite hin konvexen Krümmung vorgesehen ist (spiegelbildlich qualitativ gleich mit Typ C). Kantentyp E: ein wenigstens teilweise gekrümmter Verlauf mit einem Krümmungswechsel und mit einem Wölbungsgrad von WG > 0,01, wobei zwischen dem Krümmungswechselpunkt und der Hauptströmungspfadberandung HB ein Abschnitt mit einer zur Schaufeldruckseite hin konkaven Krümmung vorgesehen ist.
Kantentyp F: ein wenigstens teilweise gekrümmter Verlauf mit einem Krümmungswechsel und mit einem Wölbungsgrad von WG > 0,01, wobei zwischen dem Krümmungswechselpunkt und der Hauptströmungspfadberandung HB ein Abschnitt mit einer zur Schaufeldruckseite hin konvexen Krümmung vorgesehen ist (spiegelbildlich qualitativ gleich mit Typ E). Kantentyp G: ein wenigstens teilweise gekrümmter Verlauf mit zwei Krümmungswechseln und mit einem Wölbungsgrad von WG > 0,01, wobei zwischen den beiden Krümmungswechselpunkten ein Abschnitt mit einer zur Schaufeldruckseite hin konkaven Krümmung vorgesehen ist. Kantentyp H: ein wenigstens teilweise gekrümmter Verlauf mit zwei Krümmungswechseln und mit einem Wölbungsgrad von WG > 0,01, wobei zwischen den beiden Krümmungswechselpunkten ein Abschnitt mit einer zur Schaufeldruckseite hin konvexen Krümmung vorgesehen ist (spiegelbildlich qualitativ gleich mit Typ G).

Eine qualitative Gleichheit zweier Kanten ist gegeben, wenn sie entweder vom selben Typ sind (auch als gleichsinnig qualitative Gleichheit bezeichnet) oder wenn zwei Kanten unterschiedlichen Typs sind, aber spiegelbildlich auseinander hervorgehen, z.B. Typen C und D, oder Typen E und F, oder Typen G und H (auch als gegensinnig qualitative Gleichheit bezeichnet).

Die Figuren 5a und 5b zeigen eine Darstellung der Schaufelkanten in der Ansicht A-A, die den Idealfall für eine Betrachtung der Schaufelkanten repräsentiert, doch können auch Festlegungen in davon in Maßen abweichenden Ansichten der Schaufelreihenpaarung mit ihren vier Kanten innerhalb eines Winkelbereiches von +/-45° um die Koordinatenrichtung s sachdienlich sein, solange diese orthogonal zur Koordinatenrichtung or gegeben ist. Dabei ist es besonders treffend, wenn die Kanten der Schaufelreihengruppe bezüglich ihrer Eigenschaften in einer Ansicht orthogonal zu den Koordinatenrichtung q und or betrachtet werden.

Es ist von Vorteil für die Schaufelreihengruppe, wenn die hintere Schaufel (i+1) in der Umgebung der Druckseite der vorderen Schaufel (i) vorgesehen ist und alle Schaufelkanten VK(i), VK(i+1) und HK(i+1) wenigstens in einem Teilbereich zwischen der mittleren Meridionalstromlinie SLM und der Hauptströmungspfadberandung HB druckseitig von der Schaufelkante HK(i) angeordnet sind.

Es kann weiterhin günstig sein, wenn die Schaufelkante VK(i+1) wenigstens in einem Teilbereich zwischen der mittleren Meridionalstromlinie SLM und der Hauptströmungspfadberandung HB druckseitig von der Schaufelkante VK(i) angeordnet sind.

Dabei kann es günstig sein, wenn die Schaufelkante VK(i+1) mit der Schaufelkante VK(i) wenigstens einen Schnittpunkt bildet, wobei es vorteilhaft ist, wenn die Schaufelkante VK(i+1) in einem Bereich angrenzend an die Hauptströmungspfadberandung HB druckseitig von der Schaufelkante VK(i) angeordnet ist. Alternativ kann es dabei günstig sein, wenn die Schaufelkante VK(i+1) mit der Schaufelkante VK(i) wenigstens einen Schnittpunkt bildet und die Schaufelkante VK(i+1) in einem Bereich angrenzend an die Hauptströmungspfadberandung HB saugseitig von der Schaufelkante VK(i) angeordnet ist. Alternativ kann es günstig sein, wenn die Schaufelkante VK(i+1) gänzlich druckseitig von der Schaufelkante VK(i) angeordnet ist.

Es kann weiterhin günstig sein, wenn die Schaufelkante VK(i+1) gänzlich saugseitig von der Schaufelkante VK(i) angeordnet ist.

Es kann weiterhin günstig sein, wenn die Schaufelkante VK(i+1) gänzlich zwischen den Schaufelkanten VK(i) unf HK(i) angeordnet ist.

Es kann weiterhin günstig sein, wenn die Schaufelkante HK(i+1) wenigstens in einem Teilbereich zwischen der mittleren Meridionalstromlinie SLM und der Hauptströmungspfadberandung HB druckseitig von den Schaufelkanten VK(i) und VK(i+1) angeordnet ist. Dabei kann es vorteilhaft sein, wenn die Schaufelkante HK(i+1) gänzlich druckseitig von beiden Schaufelkanten VK(i) und VK(i+1) angeordnet ist.

Dabei kann es günstig sein, wenn alle Schaufelkanten VK(i), VK(i+1) und HK(i+1) gänzlich druckseitig von der Schaufelkante HK(i) angeordnet sind.

Es ist kann erfindungsgemäß günstig sein, wenn wenigstens zwei der vier Schaufelkanten der Schaufelreihenpaarung (i, i+1) bezüglich ihrer Kantentyps eine qualitative Gleichheit aufweisen. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für wenigstens drei der vier Schaufelkanten der Schaufelreihenpaarung (i, i+1) vorgesehen ist. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für alle vier Schaufelkanten der Schaufelreihenpaarung (i, i+1) vorgesehen ist. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für die Schaufelkanten HK(i) und VK(i+1) vorgesehen ist. Dabei kann es vorteilhaft sein, wenn eine gleichsinnige qualitative Gleichheit vorgesehen ist. Alternativ kann es vorteilhaft sein, wenn eine gegensinnige qualitative Gleichheit vorgesehen ist.

Es kann weiterhin vorteilhaft für die Schaufelreihengruppe sein, wenn eine qualitative Gleichheit für die Schaufelkanten VK(i) und VK(i+1) vorgesehen ist. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für die Schaufelkanten HK(i) und HK(i+1) vorgesehen ist. Dabei kann es vorteilhaft sein, wenn eine gleichsinnige qualitative Gleichheit vorgesehen ist.

Es kann weiterhin vorteilhaft für die Schaufelreihengruppe sein, wenn eine qualitative Gleichheit für die Schaufelkanten VK(i) und HK(i+1) vorgesehen ist. Dabei kann es vorteilhaft sein, wenn eine gleichsinnige qualitative Gleichheit vorgesehen ist. Alternativ kann es vorteilhaft sein, wenn eine gegensinnige qualitative Gleichheit vorgesehen ist, d.h. die Schaufelkanten spiegelbildlich auseinander hervorgehen.

Es kann weiter vorteilhaft sein, wenn eine qualitative Gleichheit von Schaufelkanten in der Ansicht A-A senkrecht zu den Koordinatenrichtungen q und or vorgesehen ist. Dabei kann es vorteilhaft sein, wenn eine gleichsinnige qualitative Gleichheit vorgesehen ist.

Es ist günstig, wenn in der Ansicht A-A an wenigstens einer der Kanten HK(i) und VK(i+1) einer der Kantentypen A, B, C, D, E und F vorgesehen ist. Dabei ist es vorteilhaft, wenn an wenigstens einer der Kanten HK(i) und VK(i+1) einer der Kantentypen C, D, E und F vorgesehen ist. Dabei ist es zusätzlich vorteilhaft, wenn an der Kante HK(i) ein Kantentyp E und an der Kante VK(i+1) ein Kantentyp F vorgesehen ist. Alternativ kann es zusätzlich vorteilhaft sein, wenn an der Kante HK(i) ein Kantentyp D und an der Kante VK(i+1) ein Kantentyp C vorgesehen ist. Alternativ kann es zusätzlich vorteilhaft sein, wenn an der Kante HK(i) ein Kantentyp E und an der Kante VK(i+1) ein Kantentyp E vorgesehen ist. Alternativ kann es zusätzlich vorteilhaft sein, wenn an der Kante HK(i) ein Kantentyp D und an der Kante VK(i+1) ein Kantentyp D vorgesehen ist.

Es ist günstig, wenn in der Ansicht A-A an wenigstens einer der Kanten VK(i) und VK(i+1) einer der Kantentypen A, B, C, D, E und F vorgesehen ist. Dabei ist es vorteilhaft, wenn an wenigstens einer der Kanten HK(i) und VK(i+1) einer der Kantentypen C, D, E und F vorgesehen ist. Dabei ist es zusätzlich vorteilhaft, wenn an der Kante HK(i) ein Kantentyp E und an der Kante VK(i+1) ein Kantentyp F vorgesehen ist. Alternativ kann es zusätzlich vorteilhaft sein, wenn an der Kante VK(i) ein Kantentyp D und an der Kante VK(i+1) ein Kantentyp C vorgesehen ist. Alternativ kann es zusätzlich vorteilhaft sein, wenn an der Kante HK(i) ein Kantentyp E und an der Kante VK(i+1) ein Kantentyp E vorgesehen ist. Alternativ kann es zusätzlich vorteilhaft sein, wenn an der Kante HK(i) ein Kantentyp D und an der Kante VK(i+1) ein Kantentyp D vorgesehen ist.

Es ist günstig, wenn in der Ansicht A-A an wenigstens einer der Kanten VK(i) und HK(i+1) einer der Kantentypen A, B, C, D, E und F vorgesehen ist. Dabei ist es vorteilhaft, wenn an wenigstens einer der Kanten HK(i) und HK(i+1) einer der Kantentypen C, D, E und F vorgesehen ist. Dabei ist es zusätzlich vorteilhaft, wenn an der Kante VK(i) ein Kantentyp C und an der Kante VK(i+1) ein Kantentyp D vorgesehen ist. Alternativ kann es zusätzlich vorteilhaft sein, wenn an der Kante VK(i) ein Kantentyp D und an der Kante VK(i+1) ein Kantentyp D vorgesehen ist. Alternativ kann es zusätzlich vorteilhaft sein, wenn an der Kante HK(i) ein Kantentyp F und an der Kante VK(i+1) ein Kantentyp E vorgesehen ist. Alternativ kann es zusätzlich vorteilhaft sein, wenn an der Kante HK(i) ein Kantentyp E und an der Kante VK(i+1) ein Kantentyp E vorgesehen ist.

Neben den im voranstehenden Text beschriebenen Kantenformtypen spielt für die Kantentypen mit wenigstens einem Krümmungswechsel die Position des Krümmungswechsels eine Rolle für die günstige Beeinflussung der Strömung im Bereich nahe der Hauptströmungspfadberandung.

Es ist günstig, wenn in der Ansicht A-A der Punkt des Krümmungswechsels wenigstens einer der Schaufelkanten VK(i), HK(i), VK(i+1) und HK(i+1) im Bereich zwischen der Viertelmeridionalstromlinie SLQ und der Hauptströmungspfadberandung HB vorgesehen ist. Dabei ist es vorteilhaft, wenn der Punkt des Krümmungswechsels näher an der SLQ als an der HB vorgesehen ist.

Es ist günstig, wenn in der Ansicht A-A der Punkt des Krümmungswechsels für wenigstens die Vorderkanten VK(i) und VK(i+1) oder die Hinterkanten HK(i) und HK(i+1) im Bereich zwischen der Viertelmeridionalstromlinie SLQ und der Hauptströmungspfadberandung HB vorgesehen ist. Dabei ist es vorteilhaft, wenn der Punkt des Krümmungswechsels näher an der SLQ als an der HB vorgesehen ist.

Es ist günstig, wenn in der Ansicht A-A der Punkt des Krümmungswechsels aller Schaufelkanten VK(i), HK(i), VK(i+1) und HK(i+1) im Bereich zwischen der Viertelmeridionalstromlinie SLQ und der Hauptströmungspfadberandung HB vorgesehen ist. Dabei ist es vorteilhaft, wenn der Punkt des Krümmungswechsels näher an der SLQ als an der HB vorgesehen ist.

Es kann weiterhin günstig sein, wenn in der Ansicht A-A der Punkt des Krümmungswechsels wenigstens einer der Schaufelkanten VK(i), HK(i), VK(i+1) und HK(i+1) näher an der HB als an der SLQ vorgesehen ist. Dabei ist es vorteilhaft, wenn dies für wenigstens eine der Vorderkanten VK(i) und VK(i+1) zutrifft.

Es kann weiterhin günstig sein, wenn in der Ansicht A-A der Punkt des Krümmungswechsels für wenigstens die Vorderkanten VK(i) und VK(i+1) oder die Hinterkanten HK(i) und HK(i+1) näher an der HB als an der SLQ vorgesehen ist. Dabei ist es vorteilhaft, wenn dies für die Vorderkanten VK(i) und VK(i+1) zutrifft.

Es kann weiterhin günstig sein, wenn in der Ansicht A-A der Punkt des Krümmungswechsels aller Schaufelkanten VK(i), HK(i), VK(i+1) und HK(i+1) näher an der HB als an der SLQ vorgesehen ist.

Es kann unter baulichen Einschränkungen auch günstig sein, wenn in der Ansicht A-A der Punkt des Krümmungswechsels wenigstens einer der Schaufelkanten VK(i), HK(i), VK(i+1) und HK(i+1) im Bereich zwischen der Viertelmeridionalstromlinie SLQ und der mittleren Meridionalstromlinie SLM vorgesehen ist. Dabei ist es vorteilhaft, wenn der Punkt des Krümmungswechsels näher an der SLQ als an der SLM vorgesehen ist.

Es kann unter baulichen Einschränkungen weiterhin günstig sein, wenn in der Ansicht A-A der Punkt des Krümmungswechsels für wenigstens die Vorderkanten VK(i) und VK(i+1) oder die Hinterkanten HK(i) und HK(i+1) im Bereich zwischen der Viertelmeridionalstromlinie SLQ und der mittleren Meridionalstromlinie SLM vorgesehen ist. Dabei ist es vorteilhaft, wenn der Punkt des Krümmungswechsels näher an der SLQ als an der SLM vorgesehen ist.

Es kann unter baulichen Einschränkungen weiterhin günstig sein, wenn in der Ansicht A-A der Punkt des Krümmungswechsels aller Schaufelkanten VK(i), HK(i), VK(i+1) und HK(i+1) im Bereich zwischen der Viertelmeridionalstromlinie SLQ und der mittleren Meridionalstromlinie SLM vorgesehen ist. Dabei ist es vorteilhaft, wenn der Punkt des Krümmungswechsels näher an der SLQ als an der SLM vorgesehen ist.

Ebenfalls von Bedeutung für eine strömungsgerechte Gestaltung der Schaufelkanten sind die Wölbungsgrade sowie die Relation der vier beteiligten Wölbungsgrade zueinander.

Zunächst werden die Wölbungsgrade hinsichtlich ihrer Größe klassifiziert, wobei vier Klassen gebildet werden:
Klasse 1: sehr kleiner Wölbungsgrad gemäß 0 < WG < 0,003
Klasse 2: kleiner Wölbungsgrad gemäß 0,003 < WG < 0,01
Klasse 3: mittlerer Wölbungsgrad gemäß 0,01 < WG < 0,05
Klasse 4: großer Wölbungsgrad gemäß 0,05 < WG < 0,2

Es ist erfindungsgemäß günstig, wenn an der Vorderkante VK(i) ein Wölbungsgrad einer der Klassen 2, 3 und 4 vorgesehen ist. Dabei ist es vorteilhaft, wenn an der VK(i) ein Wölbungsgrad einer der Klassen 3 und 4 vorgesehen ist. Dabei ist es zusätzlich vorteilhaft, wenn an der VK(i) ein Wölbungsgrad der Klasse 3 vorgesehen ist.

Es ist weiterhin günstig, wenn an der Vorderkante VK(i+1) ein Wölbungsgrad einer der Klassen 1, 2,3 und 4 vorgesehen ist. Dabei ist es vorteilhaft, wenn an der VK(i+1) ein Wölbungsgrad einer der Klassen 1, 2 und 3 vorgesehen ist. Dabei ist es zusätzlich vorteilhaft, wenn an der VK(i+1) ein Wölbungsgrad einer der Klassen 2 und 3 vorgesehen ist. Dabei ist es besonders vorteilhaft, wenn an der VK(i+1) ein Wölbungsgrad der Klasse 2 vorgesehen ist.

Es ist weiterhin günstig, wenn an der Hinterkante HK(i) ein Wölbungsgrad einer der Klassen 2, 3,und 4 vorgesehen ist. Dabei ist es vorteilhaft, wenn an der HK(i) ein Wölbungsgrad einer der Klassen 3 und 4 vorgesehen ist. Dabei ist es zusätzlich vorteilhaft, wenn an der HK(i) ein Wölbungsgrad der Klasse 3 vorgesehen ist.

Es ist weiterhin günstig, wenn an der Hinterkante HK(i+1) ein Wölbungsgrad einer der Klassen 1, 2 und 3 vorgesehen ist. Dabei ist es vorteilhaft, wenn an der HK(i+1) ein Wölbungsgrad einer der Klassen 1 und 2 vorgesehen ist. Dabei ist es zusätzlich vorteilhaft, wenn an der HK(i+1) ein Wölbungsgrad der Klasse 2 vorgesehen ist.

Es ist weiterhin günstig, wenn an der Vorderkante VK(i) ein Wölbungsgrad einer der Klassen 2 und 3 und an der Hinterkante HK(i+1) ein Wölbungsgrad einer der Klassen 1 und 2 vorgesehen ist. Dabei ist es vorteilhaft, wenn an der VK(i) ein Wölbungsgrad der Klasse 2 und an der HK(i+1) ein Wölbungsgrad der Klasse 2 vorgesehen ist. Dabei ist es zusätzlich vorteilhaft, wenn an den Kanten HK(i) und VK(i+1) ein Wölbungsgrad der Klasse 3 vorgesehen ist.

Es ist weiterhin günstig, wenn an der Vorderkante VK(i) und an der Hinterkante HK(i+1) ein Wölbungsgrad einer der Klassen 1 und 2 vorgesehen ist. Dabei ist es vorteilhaft, wenn an der VK(i) und an der HK(i+1) ein Wölbungsgrad der Klasse 2 vorgesehen ist. Dabei ist es zusätzlich vorteilhaft, wenn an den Kanten HK(i) und VK(i+1) ein Wölbungsgrad der Klasse 3 vorgesehen ist.

Es ist weiterhin günstig, wenn an der Vorderkante VK(i) und an der Hinterkante HK(i+1) ein Wölbungsgrad einer der Klassen 3 und 4 vorgesehen ist. Dabei ist es vorteilhaft, wenn an der VK(i) ein Wölbungsgrad der Klasse 4 und an der HK(i+1) ein Wölbungsgrad der Klasse 3 vorgesehen ist. Dabei ist es zusätzlich vorteilhaft, wenn an den Kanten HK(i) und VK(i+1) ein Wölbungsgrad der Klasse 3 vorgesehen ist.

Es ist weiterhin günstig, wenn an der Vorderkante VK(i) ein Wölbungsgrad einer der Klassen 1 und 2 und an der Hinterkante HK(i+1) ein Wölbungsgrad einer der Klassen 3 und 4 vorgesehen ist. Dabei ist es vorteilhaft, wenn an der VK(i) ein Wölbungsgrad der Klasse 2 und an der HK(i+1) ein Wölbungsgrad der Klasse 3 vorgesehen ist. Dabei ist es zusätzlich vorteilhaft, wenn an den Kanten HK(i) und VK(i+1) ein Wölbungsgrad der Klasse 3 vorgesehen ist.

Es ist weiterhin günstig, wenn an wenigstens zweien der Kanten VK(i), HK(i), VK(i+1) und HK(i+1) Wölbungsgrade der selben Klasse vorgesehen sind. Dabei kann es vorteilhaft sein, wenn der Wölbungsgrad an wenigstens zwei der Kanten innerhalb einer Toleranz von 0,02 gleich groß vorgesehen ist.

Es ist weiterhin günstig, wenn an den Kanten VK(i) und HK(i) Wölbungsgrade der selben Klasse vorgesehen sind. Dabei ist es vorteilhaft, wenn an den Kanten VK(i+1) und HK(i+1) ebenfalls Wölbungsgrade der selben Klasse vorgesehen sind.

Es ist weiterhin günstig, wenn an den Kanten VK(i+1) und HK(i+1) Wölbungsgrade der selben Klasse vorgesehen sind. Dabei ist es vorteilhaft, wenn an den Kanten VK(i) und HK(i) Wölbungsgrade einer anderen aber selben Klasse vorgesehen sind.

Es ist weiterhin günstig, wenn an den Kanten VK(i) und HK(i+1) Wölbungsgrade der selben Klasse vorgesehen sind. Dabei ist es vorteilhaft, wenn an den Kanten VK(i+1) und HK(i) Wölbungsgrade einer anderen aber selben Klasse vorgesehen sind.

Es ist weiterhin günstig, wenn an den Kanten VK(i+1) und HK(i) Wölbungsgrade der selben Klasse vorgesehen sind. Dabei ist es vorteilhaft, wenn an den Kanten VK(i) und HK(i+1) Wölbungsgrade einer anderen aber selben Klasse vorgesehen sind.

Es ist weiterhin günstig, wenn an wenigstens dreien der Kanten VK(i), HK(i), VK(i+1) und HK(i+1) Wölbungsgrade der selben Klasse vorgesehen sind. Dabei kann es vorteilhaft sein, wenn der Wölbungsgrad an wenigstens drei der Kanten innerhalb einer Toleranz von 0,02 gleich groß vorgesehen ist.

Es ist weiterhin günstig, wenn an allen Kanten VK(i), HK(i), VK(i+1) und HK(i+1) Wölbungsgrade der selben Klasse vorgesehen sind. Dabei kann es vorteilhaft sein, wenn der Wölbungsgrad an allen Kanten innerhalb einer Toleranz von 0,02 gleich groß vorgesehen ist.

Es ist weiterhin günstig,
wenn an der Kante VK(i) ein Wölbungsgrad der Klasse 4,
und an der Kante HK(i) ein Wölbungsgrad der Klasse 2,
und an der Kante VK(i+1) ein Wölbungsgrad der Klasse 4,
und an der Kante HK(i+1) ein Wölbungsgrad der Klasse 1 vorgesehen ist.

Es ist weiterhin günstig,
wenn an der Kante VK(i) ein Wölbungsgrad der Klasse 1,
und an der Kante HK(i) ein Wölbungsgrad der Klasse 1,
und an der Kante VK(i+1) ein Wölbungsgrad der Klasse 4,
und an der Kante HK(i+1) ein Wölbungsgrad der Klasse 1 vorgesehen ist.

Es ist weiterhin günstig,
wenn an der Kante VK(i) ein Wölbungsgrad der Klasse 4,
und an der Kante HK(i) ein Wölbungsgrad der Klasse 1,
und an der Kante VK(i+1) ein Wölbungsgrad der Klasse 1,
und an der Kante HK(i+1) ein Wölbungsgrad der Klasse 1 vorgesehen ist.

Es ist weiterhin günstig,
wenn an der Kante VK(i) ein Wölbungsgrad der Klasse 3,
und an der Kante HK(i) ein Wölbungsgrad der Klasse 2,
und an der Kante VK(i+1) ein Wölbungsgrad der Klasse 2,
und an der Kante HK(i+1) ein Wölbungsgrad der Klasse 1 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 3,
und an der Kante HK(i+1) ein Wölbungsgrad der Klasse 2 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 4,
und an der Kante HK(i+1) ein Wölbungsgrad der Klasse 2 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 3,
und an der Kante HK(i+1) ein Wölbungsgrad der Klasse 1 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 4,
und an der Kante HK(i+1) ein Wölbungsgrad der Klasse 1 vorgesehen ist.

Es ist weiterhin günstig,
wenn an der Kante VK(i) ein Wölbungsgrad der Klasse 2,
und an der Kante HK(i) ein Wölbungsgrad der Klasse 1,
und an der Kante VK(i+1) ein Wölbungsgrad der Klasse 3,
und an der Kante HK(i+1) ein Wölbungsgrad der Klasse 3 vorgesehen ist.

Es ist weiterhin günstig,
wenn an der Kante VK(i) ein Wölbungsgrad der Klasse 2,
und an der Kante HK(i) ein Wölbungsgrad der Klasse 2,
und an der Kante VK(i+1) ein Wölbungsgrad der Klasse 3,
und an der Kante HK(i+1) ein Wölbungsgrad der Klasse 3 vorgesehen ist.

Es ist weiterhin günstig,
wenn an der Kante VK(i) ein Wölbungsgrad der Klasse 2,
und an der Kante HK(i) ein Wölbungsgrad der Klasse 3,
und an der Kante VK(i+1) ein Wölbungsgrad der Klasse 4,
und an der Kante HK(i+1) ein Wölbungsgrad der Klasse 1 vorgesehen ist.

Neben den im voranstehenden Text beschriebenen Größen Kantenform und Wölbungsgrad spielt auch noch die Position der maximalen Wölbungen eine Rolle für die günstige Beeinflussung der Strömung im Bereich nahe der Hauptströmungspfadberandung.

Es ist günstig, wenn in der Ansicht A-A der Punkt maximaler Wölbung wenigstens einer der Schaufelkanten VK(i), HK(i), VK(i+1) und HK(i+1) im Bereich zwischen der Viertelmeridionalstromlinie SLQ und der Hauptströmungspfadberandung HB vorgesehen ist. Dabei ist es vorteilhaft, wenn der Punkt maximaler Wölbung näher an der SLQ als an der HB vorgesehen ist.

Es ist günstig, wenn in der Ansicht A-A der Punkt maximaler Wölbung für wenigstens die Vorderkanten VK(i) und VK(i+1) oder die Hinterkanten HK(i) und HK(i+1) im Bereich zwischen der Viertelmeridionalstromlinie SLQ und der Hauptströmungspfadberandung HB vorgesehen ist. Dabei ist es vorteilhaft, wenn der Punkt maximaler Wölbung näher an der SLQ als an der HB vorgesehen ist.

Es ist günstig, wenn in der Ansicht A-A der Punkt maximaler Wölbung aller Schaufelkanten VK(i), HK(i), VK(i+1) und HK(i+1) im Bereich zwischen der Viertelmeridionalstromlinie SLQ und der Hauptströmungspfadberandung HB vorgesehen ist. Dabei ist es vorteilhaft, wenn der Punkt maximaler Wölbung näher an der SLQ als an der HB vorgesehen ist.

Es kann weiterhin günstig sein, wenn in der Ansicht A-A der Punkt maximaler Wölbung wenigstens einer der Schaufelkanten VK(i), HK(i), VK(i+1) und HK(i+1) näher an der HB als an der SLQ vorgesehen ist. Dabei ist es vorteilhaft, wenn dies für wenigstens eine der Vorderkanten VK(i) und VK(i+1) zutrifft.

Es kann weiterhin günstig sein, wenn in der Ansicht A-A der Punkt maximaler Wölbung für wenigstens die Vorderkanten VK(i) und VK(i+1) oder die Hinterkanten HK(i) und HK(i+1) näher an der HB als an der SLQ vorgesehen ist. Dabei ist es vorteilhaft, wenn dies für die Vorderkanten VK(i) und VK(i+1) zutrifft.

Es kann weiterhin günstig sein, wenn in der Ansicht A-A der Punkt maximaler Wölbung aller Schaufelkanten VK(i), HK(i), VK(i+1) und HK(i+1) näher an der HB als an der SLQ vorgesehen ist.

Es kann unter baulichen Einschränkungen auch günstig sein, wenn in der Ansicht A-A der Punkt maximaler Wölbung wenigstens einer der Schaufelkanten VK(i), HK(i), VK(i+1) und HK(i+1) im Bereich zwischen der Viertelmeridionalstromlinie SLQ und der mittleren Meridionalstromlinie SLM vorgesehen ist. Dabei ist es vorteilhaft, wenn der Punkt maximaler Wölbung näher an der SLQ als an der SLM vorgesehen ist.

Es kann unter baulichen Einschränkungen weiterhin günstig sein, wenn in der Ansicht A-A der Punkt maximaler Wölbung für wenigstens die Vorderkanten VK(i) und VK(i+1) oder die Hinterkanten HK(i) und HK(i+1) im Bereich zwischen der Viertelmeridionalstromlinie SLQ und der mittleren Meridionalstromlinie SLM vorgesehen ist. Dabei ist es vorteilhaft, wenn der Punkt maximaler Wölbung näher an der SLQ als an der SLM vorgesehen ist.

Es kann unter baulichen Einschränkungen weiterhin günstig sein, wenn in der Ansicht A-A der Punkt maximaler Wölbung aller Schaufelkanten VK(i), HK(i), VK(i+1) und HK(i+1) im Bereich zwischen der Viertelmeridionalstromlinie SLQ und der mittleren Meridionalstromlinie SLM vorgesehen ist. Dabei ist es vorteilhaft, wenn der Punkt maximaler Wölbung näher an der Viertelmeridionalstromlinie SLQ als an der mittleren Meridionalstromlinie SLM vorgesehen ist.

Grundlegende Merkmale der erfindungsgemäßen Schaufelreihengruppe sind im voranstehenden Text festgelegt worden. Im Folgenden wird die Erfindung anhand von Beispielen weiter konkretisiert. Die Figuren 6a bis Fig. 6c zeigen dazu in den Teilabbildungen X1 bis X10 jeweils die vier Schaufelkanten VK(i), HK(i), VK(i+1) und HK(i+1) zweier benachbarter und hintereinander angeordneter Schaufeln i und i+1 zweier Schaufelreihen einer erfindungsgemäßen Schaufelreihengruppe in der Ansicht A-A gemäß der Fig. 4 im Bereich zwischen der mittleren Meridionalstromlinie SLM und der Hauptströmungspfadberandung HB. Auf halbem Weg zwischen der mittleren Meridionalstromlinie SLM und der Hauptströmungspfadberandung HB ist jeweils die Viertelmeridionalstromlinie SLQ eingezeichnet.

Der lokale Neigungswinkel einer Schaufelkante an der mittleren Meridionalstromlinie SLM oder an der Hauptströmungspfadberandung HB wird hier stets im Uhrzeigersinn von der jeweiligen Kante auf kürzestem Weg zur mittleren Meridionalstromlinie SLM bzw. zur Hauptströmungspfadberandung HB gemessen (siehe Teilabbildung X1).

Die Teilabbildung X1 der Fig. 6a zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Dabei kann es, wie hier dargestellt, vorteilhaft sein, wenn die Vorderkante VK(i) gänzlich druckseitig von der Hinterkante HK(i) vorgesehen ist. Dabei kann es weiterhin vorteilhaft sein, wenn die Vorderkante VK(i+1) gänzlich druckseitig von der Vorderkante VK(i) vorgesehen ist. Dabei kann es weiterhin vorteilhaft sein, wenn die Hinterkante HK(i+1) gänzlich druckseitig von der Vorderkante VK(i+1) vorgesehen ist.

Wenigstens zwei Kanten besitzen gleichen Kantentyp, hier derart, dass an der VK(i) ein Kantentyp D, an der HK(i) ein Kantentyp D vorgesehen ist. Es kann vorteilhaft sein, wenn dabei, anders als bildlich dargestellt, an der VK(i+1) ein Kantentyp A und an der HK(i+1) ein Kantentyp A vorgesehen ist. Es kann vorteilhaft sein, wenn an den Kanten VK(i) und HK(i) den Punkt maximaler Wölbung im Bereich zwischen SLQ und HB besitzen; in einem besonderen Fall kann der Punkt maximaler Wölbung auf der SLQ vorgesehen sein. Es kann aber auch vorteilhaft sein, wenn an den Kanten VK(i+1) und HK(i+1) ein Kantentyp D vorgesehen ist, sodass alle Kanten von gleichem Kantentyp sind. Dabei kann es vorteilhaft sein, wenn die Kanten VK(i+1) und HK(i+1) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein.

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten HK(i) und HK(i+1) sich in einem Bereich angrenzend an die HB in Richtung der HB voneinander entfernen. Es kann vorteilhaft sein, wenn die Kanten VK(i) und HK(i) sich in einem Bereich angrenzend an die HB in Richtung der HB einander annähern. Es kann zusätzlich vorteilhaft sein, wenn die Kanten VK(i) und HK(i) im Wesentlichen (innerhalb einer Toleranz von 2° lokalen Neigungswinkels) parallel verlaufen. Es kann zusätzlich vorteilhaft sein, wenn die Kanten VK(i+1) und HK(i+1) im Wesentlichen (innerhalb einer Toleranz von 2° lokalen Neigungswinkels) parallel verlaufen. Dabei kann es günstig sein, wenn die vier Schaufelkanten örtlich an der SLM mit der SLM (innerhalb einer Toleranz von 2° lokalen Neigungswinkels) einen rechten Winkel einschließen. Es kann zusätzlich vorteilhaft sein, wenn örtlich an der HB zwischen der Kante HK(i) und der HB ein stumpfer Winkel von größer 105° vorgesehen ist. Es kann zusätzlich vorteilhaft sein, wenn örtlich an der HB zwischen der Kante VK(i+1) und der HB ein Winkel zwischen 85° und 105° vorgesehen ist. Es kann zusätzlich vorteilhaft sein, wenn örtlich an der HB zwischen der HB und jeweils der Kante VK(i) und HK(i+1) der HB ein Winkel zwischen 85° und 105° vorgesehen ist.

Die Teilabbildung X2 der Fig. 6a zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Dabei kann es, wie hier dargestellt, vorteilhaft sein, wenn die Vorderkante VK(i) gänzlich druckseitig von der Hinterkante HK(i) vorgesehen ist. Dabei kann es weiterhin vorteilhaft sein, wenn die Vorderkante VK(i+1) gänzlich druckseitig von der Vorderkante VK(i) vorgesehen ist. Dabei kann es weiterhin vorteilhaft sein, wenn die Hinterkante HK(i+1) gänzlich druckseitig von der Vorderkante VK(i+1) vorgesehen ist.

Wenigstens zwei Kanten besitzen gleichen Kantentyp, hier derart, dass an der VK(i) ein Kantentyp A, an der HK(i) ein Kantentyp D, an der VK(i+1) ein Kantentyp A und an der HK(i+1) ein Kantentyp A vorgesehen ist. Es kann aber auch vorteilhaft sein, wenn an der Kante VK(i) ein Kantentyp D vorgesehen ist, sodass die vordere und hintere Schaufel jeweils gleiche Kantentypen besitzen. Dabei kann es vorteilhaft sein, wenn die Kanten VK(i) und HK(i) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein. Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten HK(i) und HK(i+1) sich in einem Bereich angrenzend an die HB in Richtung der HB voneinander entfernen.

Es kann vorteilhaft sein, wenn die Kanten VK(i) und HK(i) sich in einem Bereich angrenzend an die HB in Richtung der HB voneinander entfernen. Es kann zusätzlich vorteilhaft sein, wenn die Kanten VK(i+1) und HK(i+1) im Wesentlichen (innerhalb einer Toleranz von 2° lokalen Neigungswinkels) parallel verlaufen. Es kann zusätzlich vorteilhaft sein, wenn die Kanten VK(i) und VK(i+1) im Wesentlichen (innerhalb einer Toleranz von 2° lokalen Neigungswinkels) parallel verlaufen. Es kann zusätzlich vorteilhaft sein, wenn die Kanten VK(i) und VK(i+1) im Wesentlichen (innerhalb einer Toleranz von d/dor = 0,01) deckungsgleich verlaufen. Dabei kann es günstig sein, wenn die vier Schaufelkanten örtlich an der SLM mit der SLM (innerhalb einer Toleranz von 2° lokalen Neigungswinkels) einen rechten Winkel einschließen. Es kann zusätzlich vorteilhaft sein, wenn örtlich an der HB zwischen der Kante HK(i) und der HB ein stumpfer Winkel von größer 105° vorgesehen ist. Es kann zusätzlich vorteilhaft sein, wenn örtlich an der HB zwischen der HB und der jeweiligen Kante VK(i), VK(i+1) und HK(i+1) ein Winkel zwischen 85° und 105° vorgesehen ist.

Die Teilabbildung X3 der Fig. 6a zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Wenigstens zwei Kanten besitzen gleichen Kantentyp, hier derart, dass an der VK(i) ein Kantentyp D, an der HK(i) ein Kantentyp D, an der VK(i+1) ein Kantentyp C und an der HK(i+1) ein Kantentyp C vorgesehen ist, sodass die vordere und hintere Schaufel jeweils gleiche Kantentypen besitzen. Dabei kann es vorteilhaft sein, wenn die Kanten VK(i), HK(i), VK(i+1) und HK(i+1) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein.

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten VK(i) und VK(i+1) sich in einem Bereich angrenzend an die HB in Richtung der HB voneinander entfernen. Es kann vorteilhaft sein, wenn die Kanten HK(i) und HK(i+1) sich in einem Bereich angrenzend an die HB in Richtung der HB voneinander entfernen. Es kann zusätzlich vorteilhaft sein, wenn die Kanten VK(i+1) und HK(i+1) im Wesentlichen (innerhalb einer Toleranz von 2° lokalen Neigungswinkels) parallel verlaufen. Es kann zusätzlich vorteilhaft sein, wenn die Kanten VK(i) und HK(i) im Wesentlichen (innerhalb einer Toleranz von 2° lokalen Neigungswinkels) parallel verlaufen. Dabei kann es günstig sein, wenn die vier Schaufelkanten örtlich an der SLM mit der SLM (innerhalb einer Toleranz von 2° lokalen Neigungswinkels) einen rechten Winkel einschließen. Es kann zusätzlich vorteilhaft sein, wenn örtlich an der HB zwischen der HB und der jeweiligen Kante VK(i) und HK(i) ein stumpfer Winkel von größer 105° vorgesehen ist. Es kann zusätzlich vorteilhaft sein, wenn örtlich an der HB zwischen der HB und der jeweiligen Kante VK(i+1) und HK(i+1) ein Winkel kleiner 85° vorgesehen ist.

Die Teilabbildung X4 der Fig. 6a zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Wenigstens zwei Kanten besitzen gleichen Kantentyp, hier derart, dass an der VK(i) ein Kantentyp C, an der HK(i) ein Kantentyp D, an der VK(i+1) ein Kantentyp C und an der HK(i+1) ein Kantentyp C vorgesehen ist, sodass drei Kanten gleichen Kantentypen besitzen. Dabei kann es vorteilhaft sein, wenn die Kanten VK(i), HK(i), VK(i+1) und HK(i+1) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein.

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten VK(i) und HK(i) sich in einem Bereich angrenzend an die HB in Richtung der HB voneinander entfernen. Es kann vorteilhaft sein, wenn die Kanten HK(i) und HK(i+1) sich in einem Bereich angrenzend an die HB in Richtung der HB voneinander entfernen. Es kann zusätzlich vorteilhaft sein, wenn die Kanten VK(i+1) und HK(i+1) im Wesentlichen (innerhalb einer Toleranz von 2° lokalen Neigungswinkels) parallel verlaufen. Es kann zusätzlich vorteilhaft sein, wenn die Kanten VK(i) und VK(i+1) im Wesentlichen (innerhalb einer Toleranz von 2° lokalen Neigungswinkels) parallel verlaufen. Es kann zusätzlich vorteilhaft sein, wenn die Kanten VK(i) und VK(i+1) im Wesentlichen (innerhalb einer Toleranz von d/dor = 0,01) deckungsgleich verlaufen. Dabei kann es günstig sein, wenn die vier Schaufelkanten örtlich an der SLM mit der SLM (innerhalb einer Toleranz von 2° lokalen Neigungswinkels) einen rechten Winkel einschließen. Es kann zusätzlich vorteilhaft sein, wenn örtlich an der HB zwischen der HB und der Kante HK(i) ein stumpfer Winkel von größer 105° vorgesehen ist. Es kann zusätzlich vorteilhaft sein, wenn örtlich an der HB zwischen der HB und der jeweiligen Kante VK(i), VK(i+1) und HK(i+1) ein Winkel kleiner 85° vorgesehen ist.

Die Teilabbildung X5 der Fig. 6b zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Dabei kann es vorteilhaft sein, wenn die Hinterkante HK(i+1) gänzlich druckseitig von den Vorderkanten VK(i) und VK(i+1) vorgesehen ist. Dabei kann es vorteilhaft sein, wenn die Vorderkante VK(i+1) mit der Vorderkante VK(i) einen Schnittpunkt bildet, wo es, wie hier dargestellt, ein Bereich angrenzend an die SLM vorgesehen sein kann, in dem die Vorderkante VK(i+1) saugseitig von der Vorderkante VK(i) vorgesehen ist. Dabei kann es weiter vorteilhaft sein, wenn der Schnittpunkt im Bereich zwischen der SLQ und der HB vorgesehen ist; in einem besonderen Fall kann der Schnittpunkt näher an der SLQ oder gar auf der SLQ vorgesehen sein.

Wenigstens zwei Kanten besitzen gleichen Kantentyp, hier derart, dass an der VK(i) ein Kantentyp E, an der HK(i) ein Kantentyp E, an der VK(i+1) ein Kantentyp F und an der HK(i+1) ein Kantentyp F vorgesehen ist, sodass die vordere und hintere Schaufel jeweils Kanten gleichen Kantentyps besitzen. Dabei kann es vorteilhaft sein, wenn die Kanten VK(i), HK(i), VK(i+1) und HK(i+1) den Punkt des Krümmungswechsels im Bereich zwischen SLQ und HB besitzen. Es kann zusätzlich vorteilhaft sein, wenn der Punkt des Krümmungswechsels wenigstens einer Kante näher an der SLQ als an der HB oder der SLM vorgesehen ist; in einem besonderen Fall kann der Punkt des Krümmungswechsels auf der SLQ vorgesehen sein. Es kann auch vorteilhaft sein, wenn der Punkt des Krümmungswechsels wenigstens einer der Kanten VK(i) und VK(i+1) mit dem Schnittpunkt der Kanten VK(i) und VK(i+1) zusammenfällt.

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten HK(i+1) und HK(i) sich in einem Bereich angrenzend an die HB in Richtung der HB voneinander entfernen. Es kann zusätzlich vorteilhaft sein, wenn die Kanten VK(i+1) und HK(i+1) im Wesentlichen (innerhalb einer Toleranz von 2° lokalen Neigungswinkels) parallel verlaufen. Es kann zusätzlich vorteilhaft sein, wenn die Kanten VK(i) und HK(i) im Wesentlichen (innerhalb einer Toleranz von 2° lokalen Neigungswinkels) parallel verlaufen. Bei baulichen Einschränkungen kann es alternativ vorteilhaft sein, wenn die Kanten HK(i) und VK(i) sich in einem Bereich angrenzend an die HB in Richtung der HB voneinander entfernen. Es kann weiterhin günstig sein, wenn die vier Schaufelkanten örtlich an der SLM mit der SLM (innerhalb einer Toleranz von 2° lokalen Neigungswinkels) einen rechten Winkel einschließen. Es kann zusätzlich vorteilhaft sein, wenn örtlich an der HB zwischen der HB und der Kante HK(i) ein Winkel im Bereich 75° bis 105° vorgesehen ist. Es kann zusätzlich vorteilhaft sein, wenn örtlich an der HB zwischen der HB und der jeweiligen Kante VK(i), VK(i+1) und HK(i+1) ein Winkel im Bereich 75° bis 105° vorgesehen ist. Es kann zusätzlich vorteilhaft sein, wenn örtlich an der HB zwischen der HB und wenigstens einer der Kanten VK(i), HK(i), VK(i+1) und HK(i+1) innerhalb einer Toleranz von 2° lokalen Neigungswinkels ein rechter Winkel vorgesehen ist.

Die Teilabbildung X6 der Fig. 6b zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Dabei kann es vorteilhaft sein, wenn die Hinterkante HK(i+1) gänzlich druckseitig von den Vorderkanten VK(i) und VK(i+1) vorgesehen ist. Dabei kann es vorteilhaft sein, wenn die Vorderkante VK(i+1) mit der Vorderkante VK(i) einen Schnittpunkt bildet, wo es, wie hier dargestellt, ein Bereich angrenzend an die HB vorgesehen sein kann, in dem die Vorderkante VK(i+1) saugseitig von der Vorderkante VK(i) vorgesehen ist. Dabei kann es weiter vorteilhaft sein, wenn der Schnittpunkt im Bereich zwischen der SLQ und der HB vorgesehen ist; in einem besonderen Fall kann der Schnittpunkt näher an der SLQ oder gar auf der SLQ vorgesehen sein.

Wenigstens zwei Kanten besitzen qualitative Gleichheit, hier derart, dass an der VK(i) ein Kantentyp C, an der HK(i) ein Kantentyp E, an der VK(i+1) ein Kantentyp D und an der HK(i+1) ein Kantentyp A vorgesehen ist. Es kann aber auch vorteilhaft sein, wenn, wie hier nicht graphisch dargestellt, die Hinterkante HK(i+1) vom Typ F ist, sodass die vordere und hintere Schaufel Kanten spiegelbildlich gleichen Kantentyps besitzen. Dabei kann es vorteilhaft sein, wenn die Kanten HK(i) und HK(i+1) den Punkt des Krümmungswechsels im Bereich zwischen SLQ und HB besitzen. Es kann zusätzlich vorteilhaft sein, wenn der Punkt des Krümmungswechsels wenigstens einer Kante näher an der SLQ als an der HB oder der SLM vorgesehen ist; in einem besonderen Fall kann der Punkt des Krümmungswechsels auf der SLQ vorgesehen sein.

Dabei kann es vorteilhaft sein, wenn die Kanten VK(i) und VK(i+1) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein.

Es kann auch vorteilhaft sein, wenn der Punkt maximaler Wölbung wenigstens einer der Kanten VK(i) und VK(i+1) mit dem Schnittpunkt der Kanten VK(i) und VK(i+1) zusammenfällt. Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten HK(i+1) und HK(i) sich in einem Bereich angrenzend an die HB in Richtung der HB voneinander entfernen. Es kann weiterhin vorteilhaft sein, wenn die Kanten HK(i) und VK(i) sich in einem Bereich angrenzend an die HB in Richtung der HB voneinander entfernen. Es kann weiterhin günstig sein, wenn die vier Schaufelkanten örtlich an der SLM mit der SLM (innerhalb einer Toleranz von 2° lokalen Neigungswinkels) einen rechten Winkel einschließen. Es kann zusätzlich vorteilhaft sein, wenn örtlich an der HB zwischen der HB und der Kante HK(i) ein Winkel im Bereich 75° bis 105° vorgesehen ist. Es kann zusätzlich vorteilhaft sein, wenn örtlich an der HB zwischen der HB und der jeweiligen Kante HK(i) und HK(i+1) ein Winkel im Bereich 75° bis 105° vorgesehen ist. Es kann zusätzlich vorteilhaft sein, wenn örtlich an der HB zwischen der HB und wenigstens einer der Kanten VK(i), HK(i), VK(i+1) und HK(i+1) innerhalb einer Toleranz von 2° lokalen Neigungswinkels ein rechter Winkel vorgesehen ist.

Die Teilabbildung X7 der Fig. 6b zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Dabei kann es vorteilhaft sein, wenn die Hinterkante HK(i+1) gänzlich druckseitig von den Vorderkanten VK(i) und VK(i+1) vorgesehen ist. Dabei kann es vorteilhaft sein, wenn die Vorderkante VK(i+1) gänzlich saugseitig von der Vorderkante VK(i) vorgesehen ist. Wenigstens zwei Kanten besitzen qualitative Gleichheit, hier derart, dass an der VK(i) ein Kantentyp C, an der HK(i) ein Kantentyp E, an der VK(i+1) ein Kantentyp A und an der HK(i+1) ein Kantentyp A vorgesehen ist. Es kann aber auch vorteilhaft sein, wenn, wie hier nicht graphisch dargestellt, die Vorderkante VK(i+1) und die Hinterkante HK(i+1) vom Typ C sind, sodass drei Schaufelkanten gleichen Kantentyps vorliegen. Dabei kann es vorteilhaft sein, wenn die Kante HK(i) den Punkt des Krümmungswechsels im Bereich zwischen SLQ und HB besitzt. Es kann zusätzlich vorteilhaft sein, wenn der Punkt des Krümmungswechsels wenigstens einer Kante näher an der SLQ als an der HB oder der SLM vorgesehen ist; in einem besonderen Fall kann der Punkt des Krümmungswechsels auf der SLQ vorgesehen sein.

Dabei kann es vorteilhaft sein, wenn die Kanten VK(i), VK(i+1) und HK(i+1) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein.

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten HK(i+1) und HK(i) sich in einem Bereich angrenzend an die HB in Richtung der HB voneinander entfernen. Es kann weiterhin vorteilhaft sein, wenn die Kanten HK(i) und VK(i) sich in einem Bereich angrenzend an die HB in Richtung der HB voneinander entfernen.

Es kann zusätzlich vorteilhaft sein, wenn wenigstens zwei der vier Schaufelkanten örtlich an der SLM mit der SLM einen stumpfen Winkel größer 95° einschließen. Dabei kann es günstig sein, wenn wenigstens zwei der vier Schaufelkanten örtlich an der SLM mit der SLM einen stumpfen Winkel zwischen 100° und 115° einschließen. Es kann zusätzlich vorteilhaft sein, wenn alle vier Schaufelkanten örtlich an der SLM mit der SLM einen stumpfen Winkel größer 95° einschließen. Dabei kann günstig sein, wenn alle vier Schaufelkanten örtlich an der SLM mit der SLM einen stumpfen Winkel zwischen 100° und 115° einschließen.

Es kann zusätzlich vorteilhaft sein, wenn örtlich an der HB zwischen der HB und der Kante HK(i) ein Winkel im Bereich 75° bis 105° vorgesehen ist. Es kann zusätzlich vorteilhaft sein, wenn örtlich an der HB zwischen der HB und der jeweiligen Kante VK(i+1) und HK(i+1) ein Winkel größer 95° vorgesehen ist. Es kann zusätzlich vorteilhaft sein, wenn örtlich an der HB zwischen der HB und der Kante VK(i), ein spitzer Winkel von kleiner 85° vorgesehen ist.

Die Teilabbildung X8 der Fig. 6b zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Dabei kann es vorteilhaft sein, wenn die Hinterkante HK(i+1) gänzlich druckseitig von den Vorderkanten VK(i) und VK(i+1) vorgesehen ist. Dabei kann es vorteilhaft sein, wenn die Vorderkante VK(i+1) gänzlich saugseitig von der Vorderkante VK(i) vorgesehen ist.

Wenigstens zwei Kanten besitzen qualitative Gleichheit, hier derart, dass an der VK(i) ein Kantentyp C, an der HK(i) ein Kantentyp E, an der VK(i+1) ein Kantentyp A und an der HK(i+1) ein Kantentyp A vorgesehen ist. Es kann aber auch vorteilhaft sein, wenn, wie hier nicht graphisch dargestellt, die Vorderkante VK(i+1) und die Hinterkante HK(i+1) vom Typ C sind, sodass drei Schaufelkanten gleichen Kantentyps vorliegen. Dabei kann es vorteilhaft sein, wenn die Kante HK(i) den Punkt des Krümmungswechsels im Bereich zwischen SLQ und HB besitzt. Es kann zusätzlich vorteilhaft sein, wenn der Punkt des Krümmungswechsels wenigstens einer Kante näher an der SLQ als an der HB oder der SLM vorgesehen ist; in einem besonderen Fall kann der Punkt des Krümmungswechsels auf der SLQ vorgesehen sein.

Dabei kann es vorteilhaft sein, wenn die Kanten VK(i), VK(i+1) und HK(i+1) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein.

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten HK(i+1) und HK(i) sich in einem Bereich angrenzend an die HB in Richtung der HB voneinander entfernen. Es kann weiterhin vorteilhaft sein, wenn die Kanten HK(i) und VK(i) sich in einem Bereich angrenzend an die HB in Richtung der HB voneinander entfernen.

Es kann zusätzlich vorteilhaft sein, wenn wenigstens zwei der vier Schaufelkanten örtlich an der SLM mit der SLM einen spitzen Winkel kleiner 85° einschließen. Dabei kann es günstig sein, wenn wenigstens zwei der vier Schaufelkanten örtlich an der SLM mit der SLM einen spitzen Winkel zwischen 65° und 80° einschließen. Es kann zusätzlich vorteilhaft sein, wenn alle vier Schaufelkanten örtlich an der SLM mit der SLM einen spitzen Winkel kleiner 85° einschließen. Dabei kann günstig sein, wenn alle vier Schaufelkanten örtlich an der SLM mit der SLM einen spitzen Winkel zwischen 65° und 80° einschließen.

Es kann zusätzlich vorteilhaft sein, wenn örtlich an der HB zwischen der HB und der Kante HK(i) ein Winkel im Bereich 75° bis 105° vorgesehen ist. Es kann zusätzlich vorteilhaft sein, wenn örtlich an der HB zwischen der HB und der jeweiligen Kante VK(i+1) und HK(i+1) ein Winkel kleiner 85° vorgesehen ist. Es kann zusätzlich vorteilhaft sein, wenn örtlich an der HB zwischen der HB und der Kante VK(i), ein spitzer Winkel von kleiner 85° vorgesehen ist.

Die Teilabbildung X9 der Fig. 6c zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Dabei kann es vorteilhaft sein, wenn die Hinterkante HK(i+1) gänzlich druckseitig von den Vorderkanten VK(i) und VK(i+1) vorgesehen ist. Dabei kann es vorteilhaft sein, wenn die Vorderkante VK(i+1) mit der Vorderkante VK(i) einen Schnittpunkt bildet (nicht graphisch dargestellt), wobei ein Bereich angrenzend an die HB vorgesehen sein kann, in dem die Vorderkante VK(i+1) saugseitig von der Vorderkante VK(i) vorgesehen ist. Dabei kann es weiter vorteilhaft sein, wenn der Schnittpunkt im Bereich zwischen der SLQ und der HB vorgesehen ist; in einem besonderen Fall kann der Schnittpunkt näher an der SLQ oder gar auf der SLQ vorgesehen sein. unter baulichen Einschränkungen kann es, wie hier graphisch dargestellt, vorteilhaft sein, wenn die Vorderkante VK(i+1) gänzlich saugseitig von der Vorderkante VK(i) vorgesehen ist.

Wenigstens zwei Kanten besitzen qualitative Gleichheit, hier derart, dass an der VK(i) ein Kantentyp C, an der HK(i) ein Kantentyp E, an der VK(i+1) ein Kantentyp C und an der HK(i+1) ein Kantentyp C vorgesehen ist, sodass drei Schaufelkanten gleichen Kantentyps vorliegen. Dabei kann es vorteilhaft sein, wenn die Kante HK(i) den Punkt des Krümmungswechsels im Bereich zwischen SLQ und HB besitzt. Es kann zusätzlich vorteilhaft sein, wenn der Punkt des Krümmungswechsels wenigstens einer Kante näher an der SLQ als an der HB oder der SLM vorgesehen ist; in einem besonderen Fall kann der Punkt des Krümmungswechsels auf der SLQ vorgesehen sein.

Dabei kann es vorteilhaft sein, wenn die Kanten VK(i), VK(i+1) und HK(i+1) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein.

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten HK(i+1) und HK(i) sich in einem Bereich angrenzend an die HB in Richtung der HB voneinander entfernen. Es kann weiterhin vorteilhaft sein, wenn die Kanten HK(i) und VK(i) sich in einem Bereich angrenzend an die HB in Richtung der HB voneinander entfernen.

Es kann zusätzlich vorteilhaft sein, wenn wenigstens zwei der vier Schaufelkanten örtlich an der SLM mit der SLM einen stumpfen Winkel größer 95° einschließen. Dabei kann es günstig sein, wenn wenigstens zwei der vier Schaufelkanten örtlich an der SLM mit der SLM einen stumpfen Winkel zwischen 100° und 115° einschließen. Es kann zusätzlich vorteilhaft sein, wenn alle vier Schaufelkanten örtlich an der SLM mit der SLM einen stumpfen Winkel größer 95° einschließen. Dabei kann günstig sein, wenn alle vier Schaufelkanten örtlich an der SLM mit der SLM einen stumpfen Winkel zwischen 100° und 115° einschließen.

Es kann zusätzlich vorteilhaft sein, wenn örtlich an der HB zwischen der HB und der Kante HK(i) ein Winkel im Bereich 75° bis 105° vorgesehen ist. Es kann zusätzlich vorteilhaft sein, wenn örtlich an der HB zwischen der HB und wenigstens einer der Kanten VK(i+1) und HK(i+1) innerhalb einer Toleranz von 2°lokalen Neigungswinkels ein rechter Winkel vorgesehen ist. Es kann zusätzlich vorteilhaft sein, wenn örtlich an der HB zwischen der HB und der Kante VK(i) ein Winkel kleiner 85° vorgesehen ist.

Die Teilabbildung X10 der Fig. 6c zeigt eine erfindungsgemäße Variante einer Schaufelreihengruppe mit folgenden Merkmalen: jede der Schaufelkanten VK(i), VK(i+1) und HK(i+1) ist gänzlich druckseitig von der Hinterkante HK(i) vorgesehen. Dabei kann es vorteilhaft sein, wenn die Hinterkante HK(i+1) gänzlich druckseitig von den Vorderkanten VK(i) und VK(i+1) vorgesehen ist. Dabei kann es vorteilhaft sein, wenn die Vorderkante VK(i+1) mit der Vorderkante VK(i) einen Schnittpunkt bildet (nicht graphisch dargestellt), wobei ein Bereich angrenzend an die HB vorgesehen sein kann, in dem die Vorderkante VK(i+1) saugseitig von der Vorderkante VK(i) vorgesehen ist. Dabei kann es weiter vorteilhaft sein, wenn der Schnittpunkt im Bereich zwischen der SLQ und der HB vorgesehen ist; in einem besonderen Fall kann der Schnittpunkt näher an der SLQ oder gar auf der SLQ vorgesehen sein. unter baulichen Einschränkungen kann es, wie hier graphisch dargestellt, vorteilhaft sein, wenn die Vorderkante VK(i+1) gänzlich saugseitig von der Vorderkante VK(i) vorgesehen ist.

Wenigstens zwei Kanten besitzen qualitative Gleichheit, hier derart, dass an der VK(i) ein Kantentyp C, an der HK(i) ein Kantentyp E, an der VK(i+1) ein Kantentyp D und an der HK(i+1) ein Kantentyp D vorgesehen ist. Dabei kann es vorteilhaft sein, wenn die Kante HK(i) den Punkt des Krümmungswechsels im Bereich zwischen SLQ und HB besitzt. Es kann zusätzlich vorteilhaft sein, wenn der Punkt des Krümmungswechsels wenigstens einer Kante näher an der SLQ als an der HB oder der SLM vorgesehen ist; in einem besonderen Fall kann der Punkt des Krümmungswechsels auf der SLQ vorgesehen sein. Dabei kann es vorteilhaft sein, wenn die Kanten VK(i), VK(i+1) und HK(i+1) den Punkt maximaler Wölbung im Bereich zwischen SLQ und HB besitzen. Es kann zusätzlich vorteilhaft sein, wenn der Punkt maximaler Wölbung wenigstens einer Kante näher an der SLQ als an der HB oder der SLM vorgesehen ist; in einem besonderen Fall kann der Punkt maximaler Wölbung auf der SLQ vorgesehen sein.

Es kann vorteilhaft sein, wenn die Kanten HK(i) und VK(i+1) sich in einem Bereich angrenzend an die HB in Richtung der HB voneinander entfernen. Es kann vorteilhaft sein, wenn die Kanten HK(i+1) und HK(i) sich in einem Bereich angrenzend an die HB in Richtung der HB voneinander entfernen. Es kann weiterhin vorteilhaft sein, wenn die Kanten HK(i) und VK(i) sich in einem Bereich angrenzend an die HB in Richtung der HB voneinander entfernen.

Es kann zusätzlich vorteilhaft sein, wenn wenigstens zwei der vier Schaufelkanten örtlich an der SLM mit der SLM einen spitzen Winkel kleiner 85° einschließen. Dabei kann es günstig sein, wenn wenigstens zwei der vier Schaufelkanten örtlich an der SLM mit der SLM einen spitzen Winkel zwischen 65° und 80° einschließen. Es kann zusätzlich vorteilhaft sein, wenn alle vier Schaufelkanten örtlich an der SLM mit der SLM einen spitzen Winkel kleiner 85° einschließen. Dabei kann günstig sein, wenn alle vier Schaufelkanten örtlich an der SLM mit der SLM einen spitzen Winkel zwischen 65° und 80° einschließen.

Es kann zusätzlich vorteilhaft sein, wenn örtlich an der HB zwischen der HB und der Kante HK(i) ein Winkel im Bereich 75° bis 105° vorgesehen ist. Es kann zusätzlich vorteilhaft sein, wenn örtlich an der HB zwischen der HB und wenigstens einer der Kanten VK(i+1) und HK(i+1) innerhalb einer Toleranz von 2° lokalen Neigungswinkels ein rechter Winkel vorgesehen ist. Es kann zusätzlich vorteilhaft sein, wenn örtlich an der HB zwischen der HB und der Kante VK(i) ein Winkel kleiner 85° vorgesehen ist.

Weiterhin vorteilhaft kann es sein, wenn in wenigstens einem an eine der Hauptströmungspfadberandungen (Nabe und Gehäuse) angrenzenden Bereich der Schaufelhöhe zwischen dem vorderen Abschnitt der Saugseite einer Schaufel einer Mitgliedsschaufelreihe (i+1) und dem hinteren Abschnitt der Druckseite einer Schaufel einer Mitgliedsschaufelreihe (i) eine Nebenpassage vorgesehen ist, die die Strömung örtlich führt und das Interferenzverhalten der Mitgliedschaufelreihen (i) und (i+1) entlang der Schaufelhöhe günstig abstimmt.

Die vorliegende Figurenbeschreibung beschreibt die Lage und Form bzw. den Verlauf von Schaufelkanten zwischen der mittleren Meridionalstromlinie (SLM) und einer der Hauptströmungspfadberandungen (HB). Zur anderen der beiden Hauptströmungspfadberandungen kann ausgehend von der mittleren Meridionalstromlinie (SLM) eine entsprechende Lage und Form bzw. ein entsprechender Verlauf der Schaufelkanten realisiert sein, wobei - bezogen auf die mittlere Meridionalstromlinie (SLM) - sowohl symmetrische und asymmetrische Verläufe der Schaufelkanten realisiert sein können.

So kann sich ein vorteilhaftes Strömungsverhalten in einer erfindungsgemäßen Schaufelgruppe ergeben, wenn im Bereich der Schaufelenden an Nabe und Gehäuse angrenzend an die jeweilige Hauptströmungspfadberandung jeweils wenigstens eines der im obigen Text beschriebenen Merkmale vorgesehen ist. Dabei kann vorgesehen sein, dass im Bereich der Nabe und des Gehäuses mindestens ein gleiches Merkmal oder auch vollständig gleiche Merkmale vorgesehen sind.

## Patentansprüche

1. Schaufelreihengruppe anordbar in einem Hauptströmungspfad einer Strömungsmaschine und bestehend aus N benachbarten und sowohl in Meridionalrichtung (m) als auch in Umfangsrichtung (u) relativ zueinander fest angeordneten Mitgliedsschaufelreihen, wobei die Anzahl N der Mitgliedsschaufelreihen größer gleich 2 ist und (i) den Laufindex mit Werten zwischen 1 und N kennzeichnet, wobei eine vordere Mitgliedsschaufelreihe mit vorderen Schaufeln (i) mit Vorderkante VK(i) und Hinterkante HK(i) sowie eine hintere Mitgliedsschaufelreihe mit hinteren Schaufeln (i+1) mit Vorderkante VK(i+1) und Hinterkante HK(i+1) gegeben sind, wobei
- die Schaufelreihengruppe zwei Hauptströmungspfadberandungen (HB) aufweist,
- die Vorderkante VK(i+1) mindestens einer Schaufel (i+1) der hinteren Mitgliedsschaufelreihe in der Umgebung einer Schaufel (i) der vorderen Mitgliedsschaufelreihe (i) vorgesehen ist,
- die Kanten der Schaufeln (i, i+1) der Schaufelreihengruppen zwischen einer Hauptströmungspfadberandung (HB) und einer mittleren Meridionalstromlinie (SLM) in der Hauptströmungspfadmitte betrachtet werden,
- wobei bei Betrachtung der Schaufelreihengruppe in einer durch die Meridionalrichtung (m) und die Umfangskoordinate (u) gegebenen Ebene (Meridionalstromlinienschnitt) die Sehne der vorderen Schaufel Se(i) als die druckseitig an das Profil der vorderen Schaufel (i) angelegte Tangente definiert ist und die Sehne der hinteren Schaufel Se(i+1) als die druckseitig an das Profil der hinteren Schaufel (i+1) angelegte Tangente definiert ist,
- der Staffelungswinkel der vorderen Schaufel lambda(i) und der Staffelungswinkel der hinteren Schaufel lambda(i+1) als Neigungswinkel der jeweiligen Sehne gegen die Meridionalrichtung (m) definiert sind,
- der mittlere Staffelungswinkel lambdam als Mittelwert der Staffelungswinkel lambda(i) und lambda(i+1) definiert ist, gemäß lambdam= (lambda(i)+lambda(i+1)) / 2,
- ein Hilfskoordinatensystem mit einer ersten, einer zweiten und einer dritten Koordinatenrichtung (s, q, or) gegeben ist, die erste Koordinatenrichtung (s) unter dem Winkel lambdam gegen die Meridionalrichtung m stromabwärts weist, die zweite Koordinatenrichtung (q) senkrecht zur ersten Koordinatenrichtung (s) von der Druckseite der vorderen Schaufel (i) weg weist, und die dritte Koordinatenrichtung (or) senkrecht auf der ersten Koordinatenrichtung (s) und der zweiten Koordinatenrichtung (q),
- wobei der Wölbungsgrad WG einer Schaufelkante als größter feststellbarer Abstand (d) zwischen der betreffenden Schaufelkante selbst und der geradlinigen Verbindung der Schaufelkantenpunkte an der mittleren Meridionalstromlinie (SLM) und der Hauptströmungspfadberandung (HB), bezogen auf die senkrecht zur ersten Koordinatenrichtung (s) an der Schaufelkante zwischen der mittleren Meridionalstromlinie (SLM) und der Hauptströmungspfadberandung (HB) gemessenen Weite dor definiert ist, gemäß WG=d/dor,
**dadurch gekennzeichnet, dass**
im Bereich zwischen der mittleren Meridionalstromlinie (SLM) und einer der Hauptströmungspfadberandungen (HB) in einer Ansicht senkrecht zur dritten Koordinatenrichtung (or) und exakt entlang der ersten Koordinatenrichtung (s) die vordere Schaufelkante VK(i) der vorderen Schaufel (i) und beide Schaufelkanten VK(i+1) und HK(i+1) der hinteren Schaufel (i+1) wenigstens in einem Teilbereich zwischen der mittleren Meridionalstromlinie (SLM) und der Hauptströmungspfadberandung (HB) druckseitig von der hinteren Schaufelkante HK(i) der vorderen Schaufel (i) angeordnet sind.

2. Schaufelreihengruppe nach Anspruch 1, **dadurch gekennzeichnet, dass** die Schaufelvorderkante VK(i+1) der hinteren Schaufel (i+1) wenigstens in einem Teilbereich zwischen der mittleren Meridionalstromlinie (SLM) und der Hauptströmungspfadberandung (HB) druckseitig von der Schaufelvorderkante VK(i) der vorderen Schaufel (i) angeordnet ist.

3. Schaufelreihengruppe nach Anspruch 2, **dadurch gekennzeichnet, dass** die Schaufelvorderkante VK(i+1) der hinteren Schaufel (i+1) mit der Schaufelvorderkante VK(i) der vorderen Schaufel (i) wenigstens einen Schnittpunkt bildet.

4. Schaufelreihengruppe nach Anspruch 2, **dadurch gekennzeichnet, dass** die Schaufelvorderkante VK(i+1) der hinteren Schaufel (i+1) gänzlich druckseitig von der Schaufelvorderkante VK(i) der vorderen Schaufel (i) angeordnet ist.

5. Schaufelreihengruppe nach Anspruch 1, **dadurch gekennzeichnet, dass** die Schaufelvorderkante VK(i+1) der hinteren Schaufel (i+1) gänzlich saugseitig von der Schaufelvorderkante VK(i) der vorderen Schaufel (i) angeordnet ist.

6. Schaufelreihengruppe nach Anspruch 5, **dadurch gekennzeichnet, dass** die Schaufelkante VK(i+1) der hinteren Schaufel (i+1) gänzlich zwischen den Schaufelkanten VK(i) unf HK(i) der vorderen Schaufel (i) angeordnet ist.

7. Schaufelreihengruppe nach einem der vorangehenden Ansprüche, **dadurch gekennzeichnet, dass** die vordere Schaufelkante VK(i) der vorderen Schaufel (i) und beide Schaufelkanten VK(i+1) und HK(i+1) der hinteren Schaufel (i+1) gänzlich druckseitig von der Schaufelkante HK(i) angeordnet sind.

8. Schaufelreihengruppe nach einem der vorangehenden Ansprüche, **dadurch gekennzeichnet, dass** wenigstens zwei Schaufelkanten VK(i), HK(i), VK(i+1) und HK(i+1) der Schaufeln (i, i+1) der Schaufelreihengruppe bezüglich ihres Kantentyps eine qualitative Gleichheit aufweisen, wobei eine qualitative Gleichheit zweier Schaufelkanten VK(i), HK(i), VK(i+1) und HK(i+1) dann gegeben ist, wenn die Schaufelkanten VK(i), HK(i), VK(i+1) und HK(i+1) von selben Kantentyp sind oder spiegelbildlich vom selben Kantentyp sind, und wobei die Schaufelkanten VK(i), HK(i), VK(i+1) und HK(i+1) jeweils einem einer Mehrzahl von Kantentypen zuordbar sind, die durch die Krümmung des Kantenverlaufs und/oder die Anzahl von Krümmungswechseln und/oder den Wölbungsgrad definiert sind.

9. Schaufelreihengruppe nach Anspruch 8, **dadurch gekennzeichnet, dass** die qualitative Gleichheit der mindestens zwei Schaufelkanten VK(i), HK(i), VK(i+1) und HK(i+1) an Schaufelkanten unterschiedlicher Schaufelreihen (i, i+1) der Schaufelreihengruppe vorgesehen ist.

10. Schaufelreihengruppe nach Anspruch 9, **dadurch gekennzeichnet, dass** eine qualitative Gleichheit an den vorderen Schaufelkanten VK(i) und VK(i+1) der vorderen und hinteren Schaufel (i, i+1) vorgesehen ist.

11. Schaufelreihengruppe nach Anspruch 9, **dadurch gekennzeichnet, dass** eine qualitative Gleichheit an der hinteren Schaufelkante HK(i) der vorderen Schaufel (i) und der vorderen Schaufelkante VK(i+1) der hinteren Schaufel (i+1) vorgesehen ist.

12. Schaufelreihengruppe nach Anspruch 9, **dadurch gekennzeichnet, dass** eine qualitative Gleichheit an den hinteren Schaufelkanten HK(i) und HK(i+1) der vorderen und hinteren Schaufel (i, i+1) vorgesehen ist.

13. Schaufelreihengruppe nach einem der Ansprüche 8 bis 12, **dadurch gekennzeichnet, dass** die qualitative Gleichheit der mindestens zwei Schaufelkanten VK(i), HK(i), VK(i+1) und HK(i+1) an derselben Schaufelreihe (i, i+1) der Schaufelreihengruppe vorgesehen ist.

14. Schaufelreihengruppe nach einem der Ansprüche 8 bis 13, **dadurch gekennzeichnet, dass** die qualitative Gleichheit an mindestens drei Schaufelkanten VK(i), HK(i), VK(i+1) und HK(i+1) einer vorderen Schaufel (i) und einer hinteren Schaufel (i+1) der Schaufelreihengruppe vorgesehen ist.

15. Schaufelreihengruppe nach einem der Ansprüche 8 bis 14, **dadurch gekennzeichnet, dass** eine gleichsinnige qualitative Gleichheit der betreffenden Schaufelkanten VK(i), HK(i), VK(i+1) und HK(i+1) vorgesehen ist, d. h. die Schaufelkanten VK(i), HK(i), VK(i+1) und HK(i+1) vom selben Kantentyp sind.

## Claims

1. Blade row group arrangeable in a main flow path of a fluid-flow machine and including N adjacent member blade rows firmly arranged relative to each other in both the meridional direction (m) and the circumferential direction (u), with the number N of the member blade rows being greater than/ equal to 2 and (i) designating the running index with values between 1 and N, with a front member blade row with front blades (i) having a leading edge VK(i) and a trailing edge HK(i) as well as a rear member blade row with rear blades (i+1) having a leading edge VK(i+1) and a trailing edge HK(i+1) being provided,
- wherein the blade row group has two main flow path boundaries (HB),
- wherein the leading edge VK(i+1) of at least one blade (i+1) of the rear member blade row is provided in the vicinity of a blade (i) of the front member blade row (i),
- wherein the edges of the blades (i, i+1) of the blade row groups are viewed between a main flow path boundary (HB) and a mean meridional flow line (SLM) in the main flow path center,
- wherein, when viewing the blade row group in a plane established by the meridional direction (m) and by the circumferential coordinate (u) (meridional flow line section), the chord Se(i) of the front blade is defined as the tangent lying on the profile of the front blade (i) on the pressure side and the chord Se(i+1) of the rear blade is defined as the tangent lying on the profile of the rear blade (i+1) on the pressure side,
- wherein the stagger angle of the front blade lambda(i) and the stagger angle of the rear blade lambda(i+1) are defined as angles of inclination of the respective chord against the meridional direction (m),
- wherein the mean stagger angle lambdam is defined as the mean value of the stagger angles lambda(i) and lambda(i+1), in accordance with lambdam = (lambda(i) + lambda(i+1)) / 2,
- wherein an auxiliary coordinate system having a first, a second and a third coordinate direction (s, q, or) is provided, with the first coordinate direction (s) facing downstream at the angle lambdam against the meridional direction (m), the second coordinate direction (q), perpendicular to the first coordinate direction (s), facing away from the pressure side of the front blade (i), and the third coordinate direction (or) being perpendicular to the first coordinate direction (s) and to the second coordinate direction (q),
- wherein the degree of bulge WG of a blade edge is defined as the greatest ascertainable distance (d) between the respective blade edge itself and the straight connection of the blade edge points on the mean meridional flow line (SLM) and the main flow path boundary (HB) relative to the width dor measured perpendicular to the first coordinate direction (s) at the blade edge between the mean meridional flow line (SLM) and the main flow path boundary (HB), in accordance with WG = d/dor,
**characterized in that**
in the area between the mean meridional flow line (SLM) and one of the main flow path boundaries (HB) in a view perpendicular to the third coordinate direction (or) and exactly along the first coordinate direction (s) the blade leading edge VK(i) of the front blade (i) and both blade edges VK(i+1) and HK(i+1) of the rear blade (i+1) are arranged at least in a partial area between the mean meridional flow line (SLM) and the main flow path boundary (HB) on the pressure side of the blade trailing edge HK(i) of the front blade (i).

2. Blade row group in accordance with Claim 1, **characterized in that** the blade leading edge VK(i+1) of the rear blade (i+1) at least in a partial area between the mean meridional flow line (SLM) and the main flow path boundary (HB) is arranged on the pressure side of the blade leading edge VK(i) of the front blade (i).

3. Blade row group in accordance with Claim 2, **characterized in that** the blade leading edge VK(i+1) of the rear blade (i+1) forms at least one intersection point with the blade leading edge VK(i) of the front blade (i).

4. Blade row group in accordance with Claim 2, **characterized in that** the blade leading edge VK(i+1) of the rear blade (i+1) is arranged completely on the pressure side of the blade leading edge VK(i) of the front blade (i).

5. Blade row group in accordance with Claim 1, **characterized in that** the blade leading edge VK(i+1) of the rear blade (i+1) is arranged completely on the suction side of the blade leading edge VK(i) of the front blade (i).

6. Blade row group in accordance with Claim 5, **characterized in that** the blade edge VK(i+1) of the rear blade (i+1) is arranged completely between the blade edges VK(i) and HK(i) of the front blade (i).

7. Blade row group in accordance with one of the preceding Claims, **characterized in that** the blade leading edge VK(i) of the front blade (i) and both blade edges VK(i+1) and HK(i+1) of the rear blade (i+1) are arranged completely on the pressure side of the blade edge HK(i).

8. Blade row group in accordance with one of the preceding Claims, **characterized in that** at least two blade edges VK(i), HK(i), VK(i+1) and HK(i+1) of the blades (i, i+1) of the blade row group have a qualitative equality in respect of their edge type, wherein a qualitative equality of two blade edges VK(i), HK(i), VK(i+1) and HK(i+1) exists, when the blade edges VK(i), HK(i), VK(i+1) and HK(i+1) are of the same edge type or, when mirror-inverted, are of the same edge type, and wherein the blade edges VK(i), HK(i), VK(i+1) and HK(i+1) can each be associated with one edge type in a plurality of edge types that are defined by the curvature of the edge contour and/ or by the number of curvature changes and/ or by the degree of bulge.

9. Blade row group in accordance with Claim 8, **characterized in that** the qualitative equality of the at least two blade edges VK(i), HK(i), VK(i+1) and HK(i+1) is provided at blade edges of different blade rows (i, i+1) of the blade row group.

10. Blade row group in accordance with Claim 9, **characterized in that** a qualitative equality is provided at the blade leading edges VK(i) and VK(i+1) of the front and rear blades (i, i+1).

11. Blade row group in accordance with Claim 9, **characterized in that** a qualitative equality is provided at the blade trailing edge HK(i) of the front blade (i) and at the blade leading edge VK(i+1) of the rear blade (i+1).

12. Blade row group in accordance with Claim 9, **characterized in that** a qualitative equality is provided at the blade trailing edges HK(i) and HK(i+1) of the front and rear blades (i, i+1).

13. Blade row group in accordance with one of the Claims 8 to 12, **characterized in that** the qualitative equality of the at least two blade edges VK(i), HK(i), VK(i+1) and HK(i+1) is provided at the same blade row (i, i+1) of the blade row group.

14. Blade row group in accordance with one of the Claims 8 to 13, **characterized in that** the qualitative equality is provided at at least three blade edges VK(i), HK(i), VK(i+1) and HK(i+1) of a front blade (i) and of a rear blade (i+1) of the blade row group.

15. Blade row group in accordance with one of the Claims 8 to 14, **characterized in that** a unidirectional qualitative equality of the respective blade edges VK(i), HK(i), VK(i+1) and HK(i+1) is provided, i.e. the blade edges VK(i), HK(i), VK(i+1) and HK(i+1) are of the same edge type.

## Revendications

1. Groupe de rangées d'aubes pouvant être disposé dans un chemin d'écoulement principal d'une turbomachine et constitué de N rangées d'aubes membres adjacentes et disposées fixement les unes par rapport aux autres à la fois dans la direction méridionale (m) et dans la direction périphérique (u), le nombre N des rangées d'aubes membres étant supérieur ou égal à 2 et (i) caractérisant l'indice courant avec des valeurs comprises entre 1 et N, une rangée d'aubes membres avant avec des aubes avant (i) avec un bord d'attaque VK(i) et un bord de fuite HK(i) ainsi qu'une rangée d'aubes membres arrière avec des aubes arrière (i+1) avec un bord d'attaque VK(i+1) et un bord de fuite HK(i+1) étant données,
- le groupe de rangées d'aubes présentant deux bordures de chemin d'écoulement principal (HB),
- le bord d'attaque VK(i+1) d'au moins une aube (i+1) de la rangée d'aubes membres arrière étant prévu dans l'environnement d'une aube (i) de la rangée d'aubes membres avant (i),
- les bords des aubes (i, i+1) des groupes de rangées d'aubes étant considérés entre une bordure de chemin d'écoulement principal (HB) et une ligne d'écoulement méridionale médiane (SLM) au milieu du chemin d'écoulement principal,
- en considérant le groupe de rangées d'aubes dans un plan (coupe linéaire d'écoulement méridionale) formé par la direction méridionale (m) et les coordonnées périphériques (u), la corde de l'aube avant Se(i) étant définie comme la tangente au profil côté pression de l'aube avant (i) et la corde de l'aube arrière Se(i+1) étant définie comme la tangente au profil côté pression de l'aube arrière (i+1),
- l'angle d'échelonnement de l'aube avant lambda(i) et l'angle d'échelonnement de l'aube arrière lambda(i+1) étant définis en tant qu'angle d'inclinaison de la corde respective par rapport à la direction méridionale (m),
- l'angle d'échelonnement moyen lambdam étant défini comme valeur moyenne des angles d'échelonnement lambda(i) et lambda(i+1), avec lambdam = (lambda(i) + lambda(i+1))/2,
- un système de coordonnées auxiliaire avec une première, une deuxième et une troisième direction de coordonnées (s, q, or) étant donné, la première direction de coordonnées (s) étant orientée vers l'aval suivant l'angle lambdam par rapport à la direction méridionale (m), la deuxième direction de coordonnées (q) étant orientée perpendiculairement à la première direction de coordonnées (s) en s'éloignant du côté pression de l'aube avant (i), et la troisième direction de coordonnées (or) étant perpendiculaire à la première direction de coordonnées (s) et à la deuxième direction de coordonnées (q),
- le degré de courbure WG d'un bord d'aube étant défini comme la distance (d) maximale pouvant être établie entre le bord d'aube concerné lui-même et la liaison droite des points du bord d'aube sur la ligne d'écoulement méridionale médiane (SLM) et sur la bordure de chemin d'écoulement principal (HB), par rapport à la largeur dor mesurée perpendiculairement à la première direction de coordonnées (s) au niveau du bord d'aube entre la ligne d'écoulement méridionale médiane (SLM) et la bordure de chemin d'écoulement principal (HB), selon WG = d/dor,
**caractérisé en ce que**
dans la région entre la ligne d'écoulement méridionale médiane (SLM) et l'une des bordures du chemin d'écoulement principal (HB), dans une vue perpendiculaire à la troisième direction de coordonnées (or) et exactement le long de la première direction de coordonnées (s), le bord d'attaque VK(i) de l'aube avant (i) et les deux bords d'aubes VK(i+1) et HK(i+1) de l'aube arrière (i+1) sont disposés au moins dans une région partielle entre la ligne d'écoulement méridionale médiane (SLM) et la bordure du chemin d'écoulement principal (HB), du côté pression du bord de fuite HK(i) de l'aube avant (i).

2. Groupe de rangées d'aubes selon la revendication 1, **caractérisé en ce que** le bord d'attaque VK(i+1) de l'aube arrière (i+1) est disposé au moins dans une région partielle entre la ligne d'écoulement méridionale médiane (SLM) et la bordure du chemin d'écoulement principal (HB), du côté pression du bord d'attaque VK(i) de l'aube avant (i).

3. Groupe de rangées d'aubes selon la revendication 2, **caractérisé en ce que** le bord d'attaque VK(i+1) de l'aube arrière (i+1) forme avec le bord d'attaque VK(i) de l'aube avant (i) au moins un point d'intersection.

4. Groupe de rangées d'aubes selon la revendication 2, **caractérisé en ce que** le bord d'attaque VK(i+1) de l'aube arrière (i+1) est disposé entièrement du côté pression du bord d'attaque VK(i) de l'aube avant (i).

5. Groupe de rangées d'aubes selon la revendication 1, **caractérisé en ce que** le bord d'attaque VK(i+1) de l'aube arrière (i+1) est disposé entièrement du côté aspiration du bord d'attaque VK(i) de l'aube avant (i).

6. Groupe de rangées d'aubes selon la revendication 5, **caractérisé en ce que** le bord d'aube VK(i+1) de l'aube arrière (i+1) est disposé entièrement entre les bords d'aubes VK(i) et HK(i) de l'aube avant (i) .

7. Groupe de rangées d'aubes selon l'une quelconque des revendications précédentes, **caractérisé en ce que** le bord d'attaque VK(i) de l'aube avant (i) et les deux bords d'aubes VK(i+1) et HK(i+1) de l'aube arrière (i+1) sont disposés entièrement du côté pression du bord d'aube HK(i).

8. Groupe de rangées d'aubes selon l'une quelconque des revendications précédentes, **caractérisé en ce qu'**au moins deux bords d'aubes VK(i), HK(i), VK(i+1) et HK(i+1) des aubes (i, i+1) du groupe de rangées d'aubes présentent, en ce qui concerne leur type de bord, une identité qualitative, une identité qualitative de deux bords d'aubes VK(i), HK(i), VK(i+1) et HK(i+1) étant donnée lorsque les bords d'aubes VK(i), HK(i), VK(i+1) et HK(i+1) sont du même type de bord ou présentent une symétrie spéculaire par rapport au même type de bord, et les bords d'aubes VK(i), HK(i), VK(i+1) et HK(i+1) pouvant à chaque fois être associés à l'un d'une pluralité de types de bords qui sont définis par la courbure du contour du bord et/ou par le nombre de changements de courbure et/ou le degré de courbure.

9. Groupe de rangées d'aubes selon la revendication 8, **caractérisé en ce que** l'identité qualitative des au moins deux bords d'aubes VK(i), HK(i), VK(i+1) et HK(i+1) est prévue au niveau des bords d'aubes de rangées d'aubes différentes (i, i+1) du groupe de rangées d'aubes.

10. Groupe de rangées d'aubes selon la revendication 9, **caractérisé en ce qu'**une identité qualitative est prévue au niveau des bords d'attaque VK(i) et VK(i+1) des aubes avant et arrière (i, i+1).

11. Groupe de rangées d'aubes selon la revendication 9, **caractérisé en ce qu'**une identité qualitative est prévue au niveau du bord de fuite HK(i) de l'aube avant (i) et au niveau du bord d'attaque VK(i+1) de l'aube arrière (i+1).

12. Groupe de rangées d'aubes selon la revendication 9, **caractérisé en ce qu'**une identité qualitative est prévue au niveau des bords de fuite HK(i) et HK(i+1) des aubes avant et arrière (i, i+1).

13. Groupe de rangées d'aubes selon l'une quelconque des revendications 8 à 12, **caractérisé en ce que** l'identité qualitative des au moins deux bords d'aubes VK(i), HK(i), VK(i+1) et HK(i+1) est prévue au niveau de la même rangée d'aubes (i, i+1) du groupe de rangées d'aubes.

14. Groupe de rangées d'aubes selon l'une quelconque des revendications 8 à 13, **caractérisé en ce que** l'identité qualitative est prévue au niveau d'au moins trois bords d'aubes VK(i), HK(i), VK(i+1) et HK (i+1) d'une aube avant (i) et d'une aube arrière (i+1) du groupe de rangées d'aubes.

15. Groupe de rangées d'aubes selon l'une quelconque des revendications 8 à 14, **caractérisé en ce qu'**une identité qualitative de même sens des bords d'aubes concernés VK(i), HK(i), VK(i+1) et HK(i+1) est prévue, c'est-à-dire que les bords d'aubes VK(i), HK(i), VK(i+1) et HK(i+1) sont du même type de bord.
